# EUROPEAN PATENT APPLICATION

(11) **EP 2 607 320 A1**
(43) Date of publication of application: **26.06.2013**
(21) Application number: 11818111.4
(22) Date of filing: 10.08.2011
(51) Int. Cl.: C02F 1/44, B01D 61/58

(54) **FRESH WATER PRODUCING APPARATUS AND METHOD FOR OPERATING SAME**

(30) Priority: 17.08.2010 JP 2010182065
(71) Applicant: Toray Industries, Inc., Tokyo 103-8666 (JP)
(72) Inventor: TANIGUCHI, Masahide, Otsu-shi, Shiga 5208558 (JP); MAEDA, Tomohiro, Otsu-shi, Shiga 5208558 (JP)
(74) Representative: Hoefer & Partner
(86) International application number: PCT/JP2011/068238
(87) International publication number: WO 2012/023469

(57) **Abstract**

A fresh water producing apparatus for producing fresh water from raw water containing solutes is disclosed. The fresh water producing apparatus comprises a first semipermeable membrane unit and a second semipermeable membrane unit. A first raw water supply line for supplying the raw water is connected to the first semipermeable membrane unit. A second raw water supply line for supplying the raw water is connected to the second semipermeable membrane unit. The first semipermeable membrane unit and the second semipermeable membrane unit are connected by a concentrated water line for supplying concentrated water of the first semipermeable membrane unit to the second semipermeable membrane unit.

## Description

### Technical field:

The invention relates to fresh water producing apparatus that employ semipermeable membrane units designed to produce fresh water by treating raw water such as seawater, river water, groundwater or treated wastewater. More specifically, it relates to fresh water producing apparatus capable of efficiently producing fresh water according to the type of raw water, as well as operation methods for them.

### Background art

Since the dawn of the 21 st century, the global water environment has steadily deteriorated, and this has made it extremely important to secure water resources and develop water treatment technologies as a means of conducting it. Against this background, rapid advances are being progressed in water treatment technologies based on separation membranes, leading to their active use in diverse fields, including the purification of river/lake water, desalination of seawater, and reuse of sewage and wastewater. As part of this progress, the development of high-performance separation membranes capable of treating water with lower cost and low energy use has been promoted. Efforts are also being made to develop efficient water treatment processes including hybrid seawater desalination systems which combine the distillation process and reverse osmosis (RO) process. Such systems have already been built and put into service, mainly in the Middle East (non-patent document 1).

In the case of island nations, such as Japan and Singapore, available water resources vary from the rainy to dry season, and desalination systems that adapt to this situation by using reservoir water as raw water while reservoirs hold water and switching to seawater at other times are known.

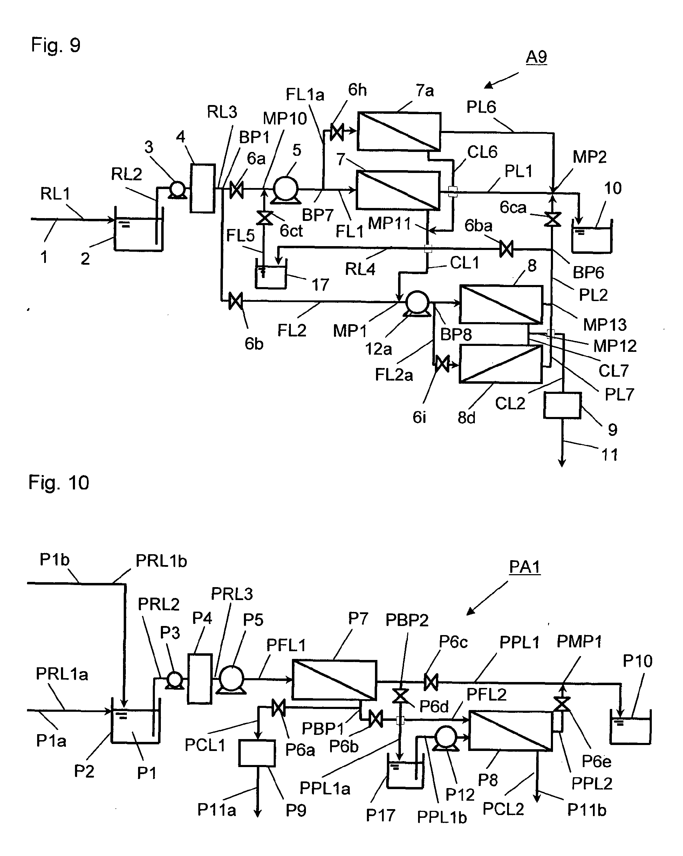

Concrete examples include a known system based on two semipermeable membrane units with a basic process flow as shown in Fig. 10 in which when raw water is brackish, it is provided with RO treatment via the first-stage semipermeable membrane unit P7, with the concentrated water from this stage fed to the second-stage semipermeable membrane unit P8 for further RO treatment to raise the total recovery rate (= permeated water flow rate/raw water flow rate); and when raw water is seawater, the permeated water of the first-stage semipermeable membrane unit P7 is fed to the second-stage semipermeable membrane unit P8 to provide RO treatment twice and thereby improve the water quality of the product water (non-patent document 2). A similar system is proposed by patent document 1.

Another known system with a basic process flow as shown in Fig. 11 has also been proposed (patent document 2) in which when raw water is brackish, it is fed to two semipermeable membrane units connected in parallel by opening valves P6b and P6j and closing valves P6k and P6I so as to increase the amount of fresh water produced; and when raw water is seawater, the permeated water of one semipermeable membrane unit is fed to the other semipermeable membrane unit by closing P6b and P6j and opening valves P6k and P6I so as to improve the water quality of the product water.

However, these methods have problems associated with the poor energy efficiency of high-pressure reverse osmosis membranes. When raw water is seawater, the first semipermeable membrane unit is required to have durability at high pressures (e.g. 5 to 7 MPa) applicable to seawater desalination and employ reverse osmosis membranes with low water permeability and high rejection performance suitable for the desalination of highly saline raw water, but treating brackish water with such high-pressure reverse osmosis membranes reduces energy efficiency due to their low water permeability. The second semipermeable membrane unit is also required to have high pressure durability and high rejection performance comparable to the first semipermeable membrane unit when raw water is seawater due to the necessity to treat the concentrated water from the first semipermeable membrane unit, despite the fact that it needs to operate at low pressures when raw water is brackish water as the permeated water of the first semipermeable membrane unit is supplied to the second unit.

### Prior art documents

### Patent documents

Patent document 1: JP 3,957,081
Patent document 2: JP 3,957,080

### Non-patent Documents

Non-patent document 1: J. K. Park et al., "Application of Hybrid Technology to the largest desalination plant, Fujairah, UAE," Proc. of IDA World Congress BAH03-193 (2003).
Non-patent document 2: J.S.S. Chin et. al., "Increasing water resources through desalination in Singapore: Planning for sustainable future," Proc. of IDA World Congress DB09-033 (2009).

### Summary of the invention

### Technical problem

The invention aims to provide fresh water producing apparatuses that employ semipermeable membranes (reverse osmosis membranes) capable of efficiently producing fresh water which satisfies the target water quality even under varying raw water salinity conditions, as well as operation methods for them.

### Solution to problem

The invention solves the problems with the means described below.

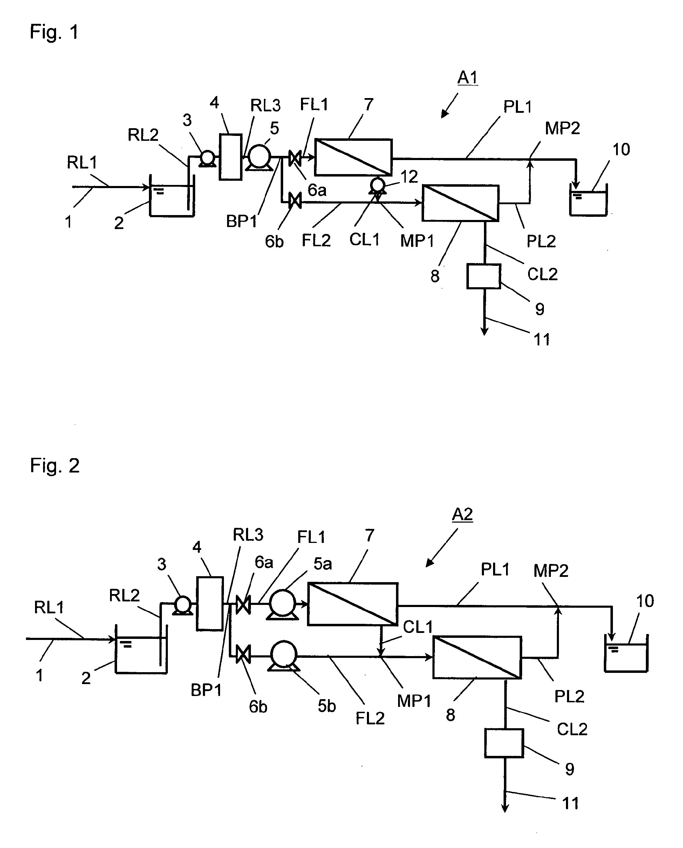

(1) A fresh water producing apparatus to produce fresh water from solute-containing raw water which comprises a first semipermeable membrane unit and a second semipermeable membrane unit, wherein a first raw water feed line for feeding the raw water is connected to the first semipermeable membrane unit, while a second raw water feed line for feeding the raw water is connected to the second semipermeable membrane unit, and wherein the first semipermeable membrane unit and the second semipermeable membrane unit are connected together with a concentrated water line that feeds concentrated water from the first semipermeable membrane unit to the second semipermeable membrane unit. Examples of the fresh water producing apparatus based on this embodiment are shown in Fig. 1 and Fig. 2.

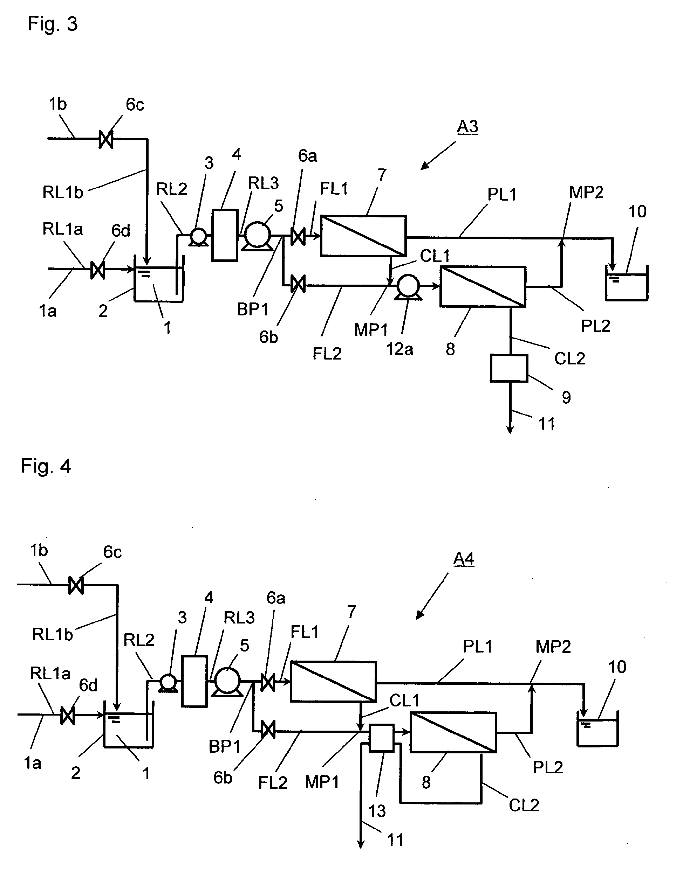

(2) The fresh water producing apparatus according to item (1) above, wherein the raw water to be fed to the first raw water feed line and the second raw water feed line is a mixture of at least two types of raw water having different compositions. Examples of the fresh water producing apparatus based on this embodiment are shown in Fig. 3, Fig. 4, Fig. 5, Fig. 6, Fig. 7, Fig. 12, Fig. 13, and Fig. 14.

(3) The fresh water producing apparatus according to item (1) or (2) above, wherein a booster pump or a non-powered pressurization unit is provided at a position in the second raw water feed line located midway between a merger point of the second raw water feed line connected to the second semipermeable membrane unit and the concentrated water line attached to the first semipermeable membrane unit and the second semipermeable membrane unit. Examples of the fresh water producing apparatus based on this embodiment are shown in Fig. 3 and Fig. 4.

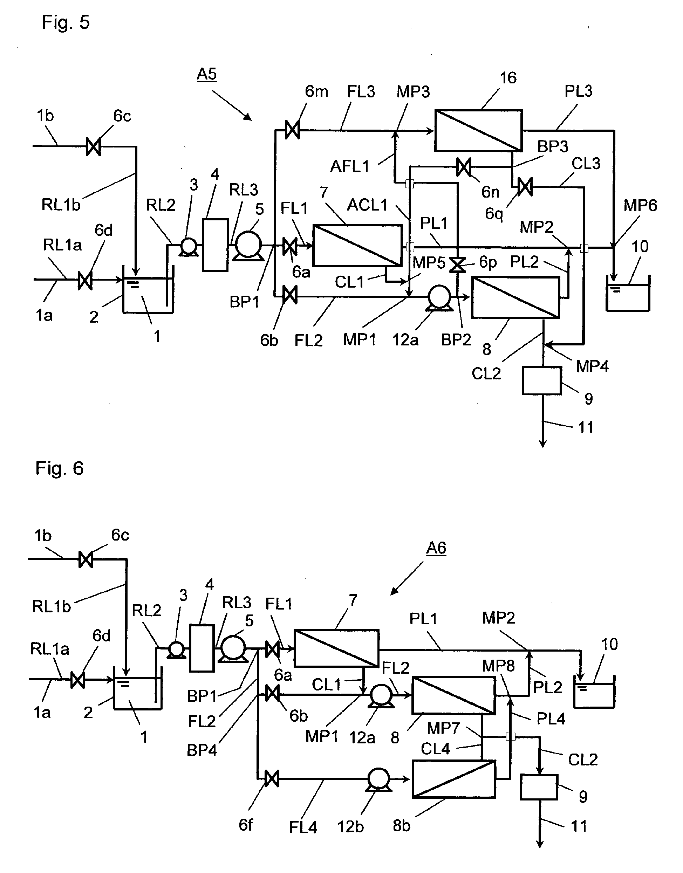

(4) The fresh water producing apparatus according to any of items (1) to (3) above, further comprising a common auxiliary semipermeable membrane unit capable of operating in parallel with both the first semipermeable membrane unit and the second semipermeable membrane unit. An example of the fresh water producing apparatus based on this embodiment is shown in Fig. 5.

(5) The fresh water producing apparatus according to any of items (1) to (4) above, further comprising an auxiliary semipermeable membrane unit capable of operating in parallel with the first semipermeable membrane unit and/or an auxiliary semipermeable membrane unit capable of operating in parallel with the second semipermeable membrane unit. Examples of the fresh water producing apparatus based on this embodiment are shown in Fig. 6, Fig. 7, Fig. 9, Fig. 12, Fig. 13, and Fig. 14.

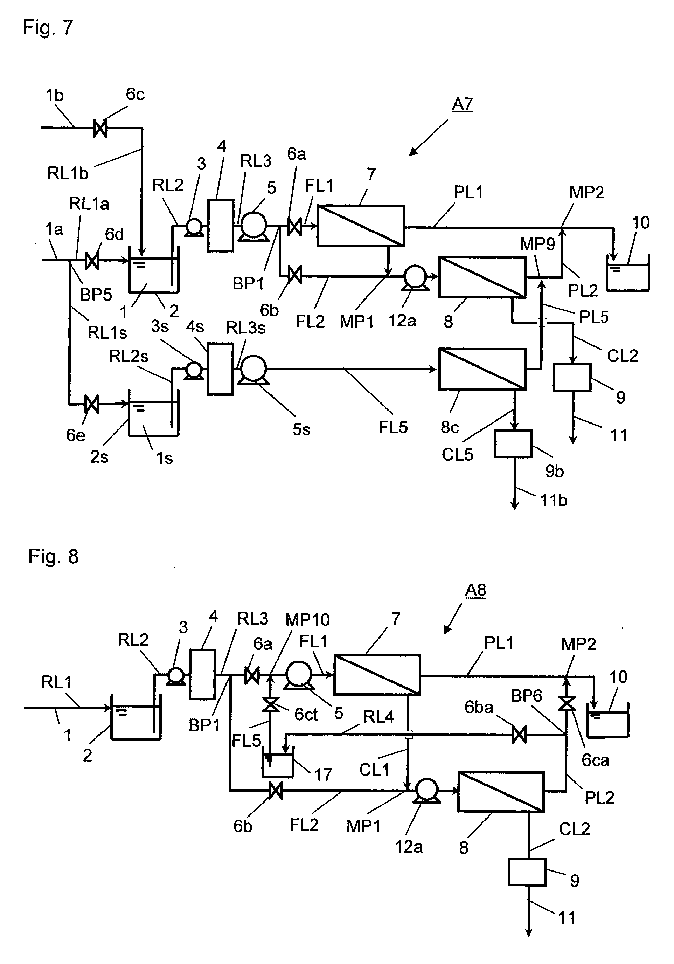

(6) The fresh water producing apparatus according to item (5) above, wherein the auxiliary semipermeable membrane unit capable of operating in parallel with the second semipermeable membrane unit is fed with different raw water from the raw water fed to the first semipermeable membrane unit and the second semipermeable membrane unit. Examples of the fresh water producing apparatus based on this embodiment are shown in Fig. 7, Fig. 12, Fig. 13, and Fig. 14.

(7) The fresh water producing apparatus according to items (1) to (6) above, wherein at least part of the permeated water of the second semipermeable membrane unit is mixed into the raw water for the first semipermeable membrane unit. Examples of the fresh water producing apparatus based on this embodiment are shown in Fig. 8 and Fig. 9.

(8) The fresh water producing apparatus according to any of items (1) to (7) above, wherein the water permeability of the first semipermeable membrane unit is higher than the water permeability of the second semipermeable membrane unit.

(9) The fresh water producing apparatus according to items (1) to (8) above, wherein the pressure resistance of the first semipermeable membrane unit is lower than the pressure resistance of the second semipermeable membrane unit.

(10) The fresh water producing apparatus according to any of items (1) to (9) above, wherein the corrosion resistance of the first semipermeable membrane unit is lower than the corrosion resistance of the second semipermeable membrane unit.

(11) An operation method for the fresh water producing apparatus described in any of items (1) to (10) above, wherein the flow rate of the raw water in the first raw water feed line connected to the first semipermeable membrane unit and the flow rate of the raw water in the second raw water feed line connected to the second semipermeable membrane unit are controlled so as to keep the feed pressure of raw water to the first semipermeable membrane unit and/or the concentrations of solutes contained in the permeated water of the first semipermeable membrane unit within set values.

(12) An operation method for the fresh water producing apparatus described in item (4) above, wherein using or not using of the common auxiliary semipermeable membrane unit and the flow rate of its feed water are controlled according to the flow rate of the feed water in the first raw water feed line connected to the first semipermeable membrane unit and the flow rate of the feed water in the second raw water feed line connected to the second semipermeable membrane unit.

(13) An operation method for the fresh water producing apparatus described in item (5) above, wherein using or not using of the auxiliary semipermeable membrane units capable of parallel operation and the flow rate of their feed water are controlled so as to keep the feed pressure of the feed water for the first semipermeable membrane unit and the feed pressure of the feed water for the second semipermeable membrane unit within set values.

(14) The operation method for a fresh water producing apparatus according to any of items (11) to (13) above, wherein a line to mix at least part of the permeated water of the second semipermeable membrane unit into the feed water for the first semipermeable membrane unit is provided and at least part of the permeated water of the second semipermeable membrane unit is mixed into the feed water for the first semipermeable membrane unit so as to keep the water quality of the treated water within set values.

(15) The fresh water producing apparatus according to any of items (5) to (7) above, wherein at least either the concentrated water from the first semipermeable membrane unit and the second semipermeable membrane unit or the concentrated water from the parallel auxiliary semipermeable membrane unit is mixed into the feed water for any of the other semipermeable membrane units.

### Effect of the invention

The invention makes it possible to use optimum semipermeable membrane units for various types of raw water, including seawater, river water, groundwater and treated wastewater, leading to an efficient production of fresh water, not possible with conventional fresh water producing apparatus.

### Brief description of the drawings

Fig. 1 is a schematic process flow diagram of an embodiment of the fresh water producing apparatus of the invention.
Fig. 2 is a schematic process flow diagram of another embodiment of the fresh water producing apparatus of the invention.
Fig. 3 is a schematic process flow diagram of another embodiment of the fresh water producing apparatus of the invention.
Fig. 4 is a schematic process flow diagram of another embodiment of the fresh water producing apparatus of the invention.
Fig. 5 is a schematic process flow diagram of another embodiment of the fresh water producing apparatus of the invention.
Fig. 6 is a schematic process flow diagram of another embodiment of the fresh water producing apparatus of the invention.
Fig. 7 is a schematic process flow diagram of another embodiment of the fresh water producing apparatus of the invention.
Fig. 8 is a schematic process flow diagram of another embodiment of the fresh water producing apparatus of the invention.
Fig. 9 is a schematic process flow diagram of another embodiment of the fresh water producing apparatus of the invention.
Fig. 10 is a schematic process flow diagram of a conventional fresh water producing apparatus.
Fig. 11 is a schematic process flow diagram of another conventional fresh water producing apparatus.
Fig. 12 is a schematic process flow diagram of another embodiment of the fresh water producing apparatus of the invention.
Fig. 13 is a schematic process flow diagram of another embodiment of the fresh water producing apparatus of the invention.
Fig. 14 is a schematic process flow diagram of another embodiment of the fresh water producing apparatus of the invention.

### Description of embodiments

Preferred embodiments of the invention are described below using drawings. However, the scope of the invention is not limited thereto.

### Example 1

Fig. 1 is a a figure (flow chart) showing an arrangement of components constituting a fresh water producing apparatus A1. An arrangement of a plurality of semipermeable membrane units to separate solutes contained in water, as well as water pipes (lines) directly or indirectly connected to them, water storage tanks, water feed pumps, and water flow rate control valves, etc. provided in the fresh water producing apparatus A1 is shown in Fig. 1.

A raw water tank 2, a pre-treatment unit 4 to provide raw water with filtration and other pre-treatments prior to delivery to semipermeable membrane units, a first semipermeable membrane unit 7, a second semipermeable membrane unit 8, a permeated water tank 10, and an energy recovery unit 9 are arranged from upstream down in the fresh water producing apparatus A1.

The downstream end of a raw water line RL1, designed to feed a raw water 1 from outside the fresh water producing apparatus A1 to the raw water tank 2, is connected to the raw water tank 2. The raw water 1 is temporarily stored in the raw water tank 2. The raw water tank 2 and the pre-treatment unit 4 are connected by a raw water line RL2. A pump 3 to feed the raw water 1 to the pre-treatment unit 4 is provided in the raw water line RL2. As the pump 3 operates, the raw water 1, temporarily stored in the raw water tank 2, is delivered to the pre-treatment unit 4, in which the raw water 1 is provided with filtration and other pre-treatments.
A raw water line RL3 is attached to the pre-treatment unit 4, and a branch point BP1, designed to divide the water flow carried by the line, is provided at its downstream end. A booster pump 5, designed to provide the raw water with the pressure required by the semipermeable membrane units is provided in the raw water line RL3.

The branch point BP1 and the first semipermeable membrane unit 7 are connected by a first raw water feed line FL1, and a valve 6a is provided in the first raw water feed line FL1. The branch point BP1 and the second semipermeable membrane unit 8 are connected by a second raw water feed line FL2, and a valve 6b is provided in the second raw water feed line FL2.

The raw water 1 drawn from the pre-treatment unit 4 and flowing through the raw water line RL3 is pressurized by the booster pump 5 and is provided to the branch point BP1. At the branch point BP1, the flow of the raw water 1 is divided, and one of the outgoing flows travels through the first raw water feed line FL1 past the valve 6a and enters a feed water-side space of the first semipermeable membrane unit 7. The other outgoing flow travels through the second raw water feed line FL2 past the valve 6b and enters a feed water-side space of the second semipermeable membrane unit 8. The valves 6a and 6b are used to control the flow rates of the raw waters supplied to the first semipermeable membrane unit 7 and the second semipermeable membrane unit 8, respectively.

As can be seen from the first semipermeable membrane unit 7 and the second semipermeable membrane unit 8 in Fig. 1, semipermeable membrane units designed to remove the solute components of water are graphically represented by a rectangle with one of its diagonal lines drawn. This drawing technique is customarily used in the present technical field when illustrating semipermeable membrane units. In the present patent application, the same drawing technique is used when denoting semipermeable membrane units in the drawings.

The rectangle represents a container of a semipermeable membrane unit, while the diagonal line represents the semipermeable membranes (reverse osmosis membranes) housed in it. Water fed to a semipermeable membrane unit is treated by the semipermeable membranes inside. The portion of the water that fails to pass through semipermeable membranes is commonly called "concentrated water". The concentrated water is discharged from the semipermeable membrane unit. The portion of the water that passes through semipermeable membranes, on the other hand, is commonly called the "permeated water". The permeated water is discharged from the semipermeable membrane unit. The semipermeable membrane unit has a feed water receiving port to introduce feed water into the feed water retaining space of the semipermeable membrane unit from outside, a concentrated water discharge port to discharge the concentrated water, and a permeated water discharge port to discharge the permeated water as it reaches the permeated water retaining space after passing through the semipermeable membrane.

In Fig. 1, the downstream end of the first raw water feed line FL1 is connected to the feed water receiving port of the first semipermeable membrane unit 7, while the downstream end of the second raw water feed line FL2 is connected to the feed water receiving port of the second semipermeable membrane unit 8. The concentrated water discharge port of the first semipermeable membrane unit 7 and a merger point MP1 provided on the second raw water feed line FL2 are connected by a concentrated water line CL1. A booster pump 12 is provided in the concentrated water line CL1. The booster pump 12 pressurizes the concentrated water flowing through the concentrated water line CL1, as necessary.

The concentrated water line CL1 of the first semipermeable membrane unit (first-stage semipermeable membrane unit) 7 is provided with the booster pump 12, and the booster pump 12 compensates for the pressure difference with the raw water feed line (bypass line) FL2 resulting from a pressure drop inside the first semipermeable membrane unit (first-stage semipermeable membrane unit) 7. However, it is, in essence, possible to restore a pressure balance without the use of the booster pump 12 by creating a pressure drop by narrowing the aperture of the valve 6b.

The concentrated water discharge port of the second semipermeable membrane unit 8 is connected with a concentrated water line CL2, and the energy recovery unit 9 is provided in the concentrated water line CL2. A concentrated water 11 discharged from the second semipermeable membrane unit 8 is discharged outside the fresh water producing apparatus A1 via the energy recovery unit 9. The energy recovery unit 9 recovers the pressure energy retained by the concentrated water flowing through the concentrated water line CL2.

The permeated water discharge port of the first semipermeable membrane unit 7 is connected with a permeated water line PL1, the downstream end of which is connected to the permeated water tank 10. The permeated water discharge port of the second semipermeable membrane unit 8 is connected with a permeated water line PL2, the downstream end of which is connected to the permeated water line PL1 at a merger point MP2. This line configuration allows the permeated water of the first semipermeable membrane unit 7 and the permeated water of the second semipermeable membrane unit 8 to be stored in the permeated water tank 10. The permeated water stored in the permeated water tank 10 is used as fresh water.

The characteristics of the fresh water producing apparatus A1 as illustrated in Fig. 1 are described below.

The fresh water producing apparatus A1 is a fresh water producing apparatus to produce fresh water from the solute-containing raw water 1 that comprises the first semipermeable membrane unit 7 and the second semipermeable membrane unit 8. The first semipermeable membrane unit 7 is connected with the first raw water feed line FL1, designed to deliver the raw water 1 to it, while the first semipermeable membrane unit 7 and the second semipermeable membrane unit 8 are connected together by the concentrated water line CL1, designed to transport the concentrated water from the first semipermeable membrane unit 7 to the second semipermeable membrane unit 8. In addition, the second semipermeable membrane unit 8 is connected with the second raw water feed line, FL2, designed to deliver the raw water 1 to it.

The fresh water producing apparatus A1 shown in Fig. 1 employs a system configuration capable of either delivering all of the raw water 1 to the first semipermeable membrane unit (first-stage semipermeable membrane unit) 7 via the valves 6a and 6b or directly delivering all or part of the raw water 1 to the second semipermeable membrane unit (second-stage semipermeable membrane unit) 8 by bypassing the first semipermeable membrane unit (first-stage semipermeable membrane unit) 7 to various degrees.

When treating low-concentration raw water, such as river water, using this apparatus, all of the raw water is initially passed through the first-stage semipermeable membrane unit 7 for treatment by fully opening the valve 6a and fully closing the valve 6b, with the bypassed flow rate gradually increased with the rise in concentration by opening the valve 6b and closing the valve 6a with a view to eventually treating all of the raw water using the second-stage semipermeable membrane unit 8. Such control is preferable to keep the concentration of the permeated water low, given that it rises as the concentration of raw water rises. This is achieved through the embodiment described in item (11) above.

For this reason, it is preferable to apply brackish-grade semipermeable membranes (low concentration) to the first-stage semipermeable membrane unit 7 and seawater-grade semipermeable membranes (high concentration) to the second-stage semipermeable membrane unit 8, though there are no specific restrictions.

Since the seawater-grade semipermeable membranes are designed for high pressure resistance compared to the brackish-grade semipermeable membranes, equipment costs can be reduced by setting the pressure resistance of the first-stage semipermeable membrane unit 7 lower than the pressure resistance of the second-stage semipermeable membrane unit 8. This is achieved through the embodiment described in item (9) above.

Since the seawater-grade semipermeable membranes have high rejection efficiency against solutes and low water permeability, it is preferable that the first-stage semipermeable membrane unit 7 has a higher water permeability than the second-stage semipermeable membrane unit 8. This is achieved through the embodiment described in item (8) above.

Here, the pressure resistance means the maximum pressure at which a membrane is able to maintain its rejection preformance against solutes when positive pressure is applied to it from the raw water side to the permeated water side. Any pressure higher than that results in a reduction in water permeability or an extreme reduction in rejection performance against solutes due to membrane deformation.

In general, the high-pressure semipermeable membranes have a dense structure or employ high-strength members for the membrane support to obtain high pressure resistance compared to the low-pressure semipermeable membranes. Pressure resistance can be easily verified by observing whether rejection or water permeability falls below the allowable limit when the operating pressure is increased.

There is also a need to enhance the pressure resistance of membrane elements, membrane modules and the membranes unit as a whole by employing adhesives, casings, pressure vessels and piping members that do not burst, get damaged or leak when subjected to high pressure. A common way to verify such pressure resistance is to apply progressively increasing hydrostatic pressure and find the pressure at which leakage or bursting occurs. The upper limit of operation is often set several times less than the measured pressure to allow for a safe margin.

In light of the fact that the first-stage semipermeable membrane unit 7 and the second-stage semipermeable membrane unit 8 are basically for low-concentration water and medium-to-high concentration water, respectively, the corrosion resistance of the first-stage semipermeable membrane unit 7 and the booster pump 5a (see Fig. 2 shown hereinafter) is not required to be so high, so that SUS304, SUS316, SUS316L and other general-purpose stainless steels, commonly considered to be unamenable to seawater desalination, may be used as materials for their components.

On the other hand, the second-stage semipermeable membrane unit 8 and the booster pump 5b (see Fig. 2 shown hereinafter), which are subject to high-concentration conditions, are required to have higher corrosion resistance than the first-stage semipermeable membrane unit 7 or the booster pump 5a, making it preferable to use SUS254SMO, SAF2507 and other super-austenitic or super-duplex stainless steels as materials for their components in cases where concentrations exceed the seawater level. This is achieved through the embodiment described in item (10) above.

Here, the corrosion means general or local corrosion, particularly such corrosion caused by acids and chlorides, and critical corrosion curves based on temperature, pH, chloride concentration, and other parameters can be obtained on a material by material basis. It is necessary to select materials so as to avoid extra-critical conditions (high temperature, strong acid and high concentration). There are various methods to test corrosion resistance according to the type of corrosion, and a typical method is to observe for the occurrence of corrosion, any change in weight, any reduction in strength, and the like after immersion for a specified period of time under specified conditions.

Such being the case, the fresh water producing apparatus proposed by the invention can reduce equipment costs by reducing the pressure resistance and/or corrosion resistance of the first-stage semipermeable membrane unit 7 and its associated elements.

However, consideration needs to be given to the feed pressure for the first-stage semipermeable membrane unit 7. Namely, in cases where the single booster pump 5 delivers raw water to both the first-stage semipermeable membrane unit 7 and the second-stage semipermeable membrane unit 8 as illustrated in Fig. 1, the booster pump 5 is often designed to have a capacity that is greater than the pressure resistance of the first-stage semipermeable membrane unit 7, and this necessitates a safety measure to keep the pressure from exceeding the set value. This is achieved through the embodiment described in item (11) above.

From the viewpoint of treating raw waters with diverse water quality profiles as an objective of the invention, it is preferable to supply the raw water 1 via a single line under variable concentration conditions or two separate lines dedicated to different concentration conditions. While the choice between them and the mixing ratio of raw waters with different compositions depend on the design of the fresh water producing apparatus, it is preferable to limit the variation in operating pressure by, for example, controlling the mixing ratio of raw waters to minimize the variation in the concentration of the mixed raw water, increasing the warmer raw water if the temperature is low, and increasing the lower-concentration raw water to reduce the concentration of the mixed raw water. This is achieved through the embodiment described in item (2) above.

While, in Fig. 1, only one of the booster pump 5 supplies raw water to two of the semipermeable membrane units, it is possible to provide a booster pump on each of respective branched raw water feed lines to constitute two booster pumps 5a and 5b, as illustrated in Fig. 2 described later, or to provide a booster pump 12a immediately before the second-stage semipermeable membrane unit to raise the raw water feed pressure for the second-stage semipermeable membrane unit, as illustrated in Fig. 3 described later. It is also possible to use a non-powered pressurization unit 13, designed to raise pressure by utilizing the pressure energy of concentrated water, in place of the booster pump, as illustrated in Fig. 4 described later. This is achieved through the embodiment described in item (3) above.

With the fresh water producing apparatus of the invention, if the bypass flow rate is changed, the feed flow rates to the first-stage semipermeable membrane unit 7 and the second-stage semipermeable membrane unit 8 change, but the semipermeable membrane unit usually has a maximum value and a minimum value for its flow rate setting. One way of controlling the flow rate within this range is to construct the semipermeable membrane unit from two or more subunits and change the number of subunits (auxiliary semipermeable membrane unit) in operation according to the flow rate. Moreover, since a reduction in the feed flow rate to the first-stage semipermeable membrane unit, i.e. an increase in the bypass flow rate, leads to an increase in the feed flow rate to the second-stage semipermeable membrane unit, it is preferable to introduce a common auxiliary semipermeable membrane unit 16, as illustrated in Fig. 5 described later, to increase the total membrane area of the second-stage semipermeable membrane unit in compensation for the reduction in the total membrane area of the first-stage semipermeable membrane unit. This is achieved through the embodiments described in items (4), (12) and (13) above.

Furthermore, it is possible to provide flexibility by supplying raw water to a subunit (auxiliary semipermeable membrane unit) 8b connected in parallel with the second-stage semipermeable membrane unit, as illustrated in Fig. 6 described later. This is achieved through the embodiment described in items (5) and (6) above.

When two or more types of raw water are available, a preferable embodiment is to feed a high-concentration raw water 1 s directly to a subunit (auxiliary semipermeable membrane unit) 8c placed in parallel with the second-stage semipermeable membrane unit, depending on its flow rate, as illustrated in Fig. 7 described later. This is achieved through the embodiment described in item (7) above.

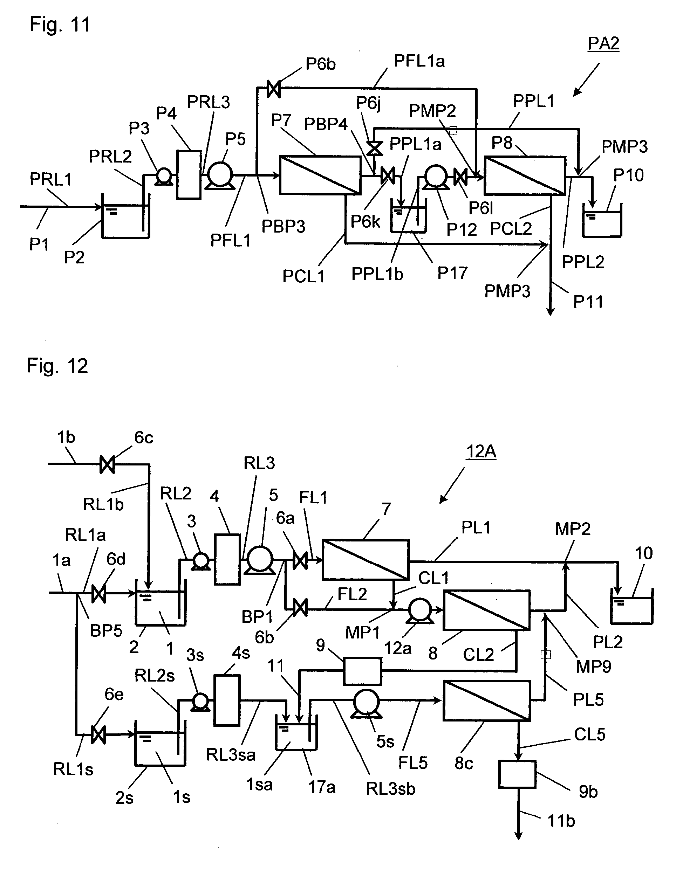

In this case, given that a concentrated water 11 from the second-stage semipermeable membrane unit 8 in Fig. 7 has a similar level of concentration to the high-concentration raw water 1s depending on operating conditions, it is possible to use it as feed water for an auxiliary semipermeable membrane unit 8c, as illustrated in Fig. 12 described later.

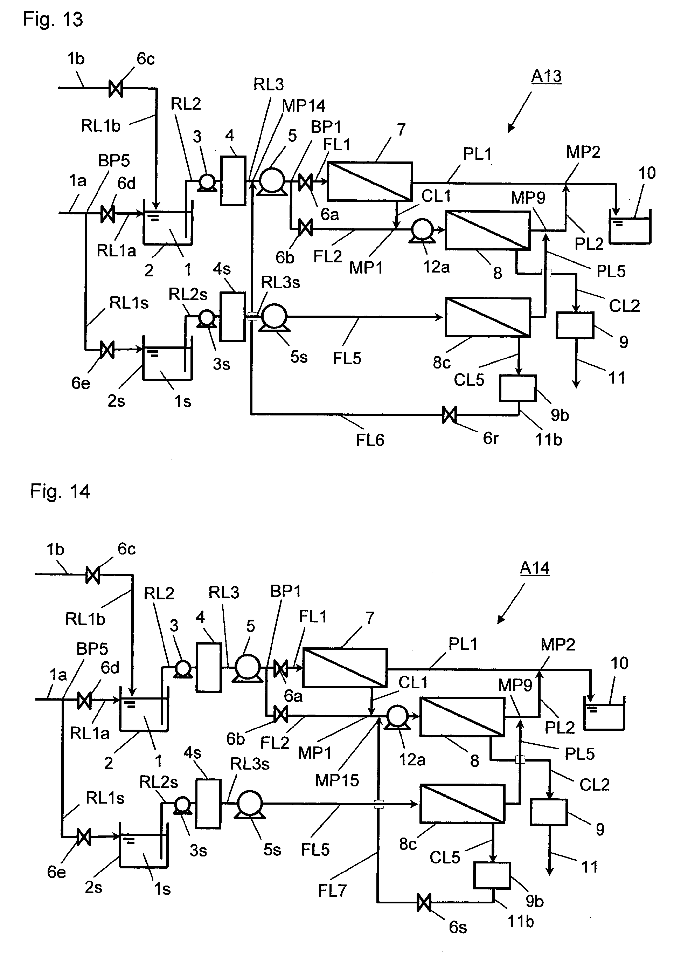

While an intermediate tank 17 (see Fig. 8 and Fig. 9) or 17a (see Fig. 12) is assigned the roles of ensuring thorough mixing and acting as a buffer against flow rate fluctuations, it is possible to opt for direct mixing without the intermediate tank or build a static mixer into the piping. If the concentration of the concentrated water from one of the semipermeable membrane units is at the same level as the feed water for the other semipermeable membrane unit or lower, it is possible to mix the concentrated water from the parallel auxiliary semipermeable membrane unit into the feed water for either semipermeable membrane, as illustrated in Fig. 13 and Fig. 14 described later. Since this can virtually eliminate the discharge of concentrated water from one of the auxiliary semipermeable membrane units, it is a very preferable embodiment. This is achieved through the embodiment described in item (15) above.

While prior art (non-patent document 2) discloses a method to re-treat the permeated water of the first-stage semipermeable membrane unit using the second-stage semipermeable membrane unit in cases where the permeated water of the first-stage semipermeable membrane unit does not have acceptable water quality, the invention can also provide a flexible system capable of accommodating the raw water profile by employing a configuration as illustrated in Fig. 8 described later.

Namely, when treating the raw water 1, which is river water or other low-concentration water, in Fig. 8, all of it is passed through the first-stage semipermeable membrane unit 7 for treatment by fully opening the valve 6a and fully closing the valve 6b, with all of its concentrated water treated using the second-stage semipermeable membrane unit 8. During this process, the valves 6ba and 6ct are fully closed, and the valve 6ca is fully open.

As the concentration of the raw water 1 increases, the valve 6b is gradually opened to bypass a suitable flow rate, and, eventually, all of the raw water is treated using the second-stage semipermeable membrane unit 8 by fully closing the valve 6a and fully opening the valve 6b. During this process, the valve 6ca is fully open, and the valve 6ba is fully closed.

If it is desired to prevent the water quality of the permeated water from dropping even when the concentration of the raw water 1 increases or the degradation of membranes or a change in temperature occurs, there is a solution. Namely, by opening the valve 6ba and closing the valve 6ca to direct all or part of the permeated water of the second-stage semipermeable membrane unit to the intermediate tank 17 according to the extent of deterioration and by opening the valve 6ct to deliver it to the first-stage semipermeable membrane unit 7 for re-treatment, a permeated water having excellent water quality can be obtained. This is achieved through the embodiment described in items (7) and (14) above.

In addition to flow rate adjustment via valve operation, it is preferable to control the flow rate by using inverters installed in the raw water feed pump 3, the booster pump 5, and the like from the viewpoint of energy efficiency. It is also preferable to break up the first-stage semipermeable membrane unit and second-stage semipermeable membrane unit into two or more subunits, as illustrated in Fig. 9 described later, and change the number of subunits in operation according to the flow rate.

In addition to river water, seawater, treated sewage, and the like as mentioned hereinbefore, the types of raw water applicable to the fresh water producing apparatus of the invention include discharged post-treatment concentrated waters and cooling water effluents from power stations and other sites. The fresh water producing apparatus of the invention is capable of taking on raw waters characterized by seasonal and other variations in terms of, for example, the amount available for withdrawal and water quality.

Though there are no specific restrictions on semipermeable membrane units applicable to the invention, it is preferable to use a type that comprises fluid separation elements, each produced by placing a hollow fiber or flat-shape semipermeable membrane in a chassis, packed in a pressure vessel for ease of handling.

A common way of assembling a fluid separation element from a flat membrane is to wrap the membrane around a porous central tube together with a flow path-providing material (net). Typical commercial products include the TM700 and TM800 series of reverse osmosis membrane elements from Toray Industries, Inc. A semipermeable membrane unit may contain just one of these fluid separation elements or two or more connected in series or parallel.

As materials for semipermeable membranes, polymeric materials, such as cellulose acetate-based polymers, polyamides, polyesters, polyimides and vinyl polymers, may be used. In terms of structure, membranes may be either asymmetric, featuring a dense layer on at least one side and pores with progressively increasing sizes that extend from the dense layer towards the membrane interior or the other side, or composite, comprising a dense layer and a very thin functional layer formed of a different material over the dense layer.

A semipermeable membrane unit is subject to the deposition of scales due to the occurrence of a concentration of feed water inside it. To prevent this and adjust pH, it is possible to add a scale preventive and an acid/alkali to feed water for each semipermeable membrane unit. It is preferable that the addition of a scale preventive be performed on the upstream side of pH adjustment to ensure its effectiveness. With a view to preventing a dramatic change in the concentration of additives or pH near additive outlets, it is also preferable to introduce an in-line mixer immediately after the application of additives or ensure that the outlets are in direct contact with the flow of the feed water.

Scale preventives form complexes with metals, metal ions, and the like present in a solution to keep metals and metal salts soluble, and organic or inorganic ionic polymers/monomers can be used for this purpose. Such organic polymers include poly(acrylic acid), sulfonated polystyrene, polyacrylamide, poly(allyl amine) and other synthetic polymers, as well as carboxymethyl cellulose, chitosan, alginic acid and other natural polymers. Organic monomers include ethylenediamineetraacetic acid. Inorganic scale preventives include polyphosphate.

Of these scale preventives, polyphosphate and ethylenediamineetraacetic acid (EDTA) may be advantageously used in terms of availability, ease of handling, e.g. solubility and price. Polyphosphate is an inorganic polymeric phosphoric acid-derived compound, such as sodium hexametaphosphate, that contains two or more phosphorus atoms and consists of phosphoric acid molecules bonded via alkali metal or alkali earth atoms. Typical polyphosphates include tetrasodium pyrophosphate, disodium pyrophosphate, sodium tripolyphosphate, sodium tetrapolyphosphate, sodium heptapolyphosphate, sodium decapolyphosphate, sodium metaphosphate, sodium hexametaphosphate, and potassium salts of the same acids.

As such acids and alkalis, sulfuric acid, sodium hydroxide, and calcium hydroxide are generally used, but hydrochloric acid, oxalic acid, potassium hydroxide, sodium bicarbonate, ammonium hydroxide, and the like could also be used. From the viewpoint of preventing the proliferation of scale-forming components in seawater, it is advisable not to use calcium or magnesium.

The pre-treatment unit 4 in the invention may incorporate the removal of turbidity causing components, disinfection and other functions according to the quality of the feed water or other considerations.

If turbidity causing substances need to be removed from feed water, the application of sand filtration, a microfiltration membrane or an ultrafiltration membrane is effective. If the water also contains a lot of bacteria, algae or other microorganisms, it is preferable to apply a disinfectant as well. As a disinfectant, the use of chlorine is preferable. This can be done by, for example, adding chlorine gas or sodium hypochlorite to feed water to generate free chlorine in the concentration range of 1 to 5 mg/l.

Some semipermeable membranes do not have chemical durability against specific disinfectants. In cases where such membranes are used, it is preferable to add a disinfectant to feed water at as upstream a location as possible and render it ineffective near the feed water inlet of the semipermeable membrane unit. In the case of free chlorine, for example, it is advisable to measure its concentration and, based on the readings, control the amount of chlorine gas or sodium hypochlorite added or add a reductant, such as sodium hydrogen sulfite.

If bacteria, protein, natural organic components, and the like are present, in addition to turbidity causing substances, it is effective to add a flocculant, such as polyaluminum chloride, aluminum sulfate or iron(III) chloride. Flocculated feed water can be made suitable for feeding a semipermeable membrane unit by subjecting it in advance to sedimentation using a baffle plate, followed by sand filtration or microfiltration/ultrafiltration based on two or more hollow fiber filters bundled together. Prior to the application of a coagulant, it is preferable to adjust pH to facilitate coagulation.

When sand filtration is used for pre-treatment, either gravity filtration, which relies on natural downward movement of water, or pressure filtration, which involves a pressure vessel packed with sand, may be applied. Filter media may comprise a single component, but a combination of different components, such as anthracite, silica sand, garnet and pumice, can be used to enhance filtration efficiency.

There are no particular restrictions on microfiltration membranes or ultrafiltration membranes, so that a flat membrane, hollow-fiber membrane, tubular membrane, pleated membrane or any other shape can be used, as appropriate.

Membrane materials are also free from particular restrictions, and a range of inorganic materials, including polyacrylonitrile, poly(phenylene sulfone), poly(phenylene sulfide sulfone), poly(vinylidene fluoride), polypropylene, polyethylene, polysulfone, poly(vinyl alcohol), cellulose acetate and ceramics, can be used.

Regarding the filtration method, either pressure filtration, which pressurizes the feed water to pass it through the filter, or suction filtration, which sucks the feed water through the filter from the filtrate side, can be used. With suction filtration, it is preferable to apply a flocculation-membrane filtration system or a membrane biological reactor (MBR), in which water is filtered through a microfiltration membrane or ultrafiltration membrane immersed in a flocculation-precipitation tank or biological treatment tank.

If the feed water contains a large amount of soluble organic matter, the removal of such matter via dissolved air flotation or activated carbon filtration is an option, though it can be decomposed by adding chlorine gas or sodium hypochlorite. If, on the other hand, a large amount of soluble inorganic matter is contained, it is advisable to add a chelating agent, such as an organic polymer electrolyte or sodium hexametaphosphate, or replace it with soluble ions through the use of an ion-exchange resin or the like. If iron or manganese is present in a soluble state, it is preferable to use an aeration, oxidation and filtration method or a contact oxidation and filtration method.

To remove specific ions and polymers in advance with a view to operating the fresh water producing apparatus of the invention at high efficiency, it is possible to use a nanofiltration membrane for pre-treatment.

Some modified embodiments of the fresh water producing apparatus A1 in Fig. 1 are described in the following examples:

### Example 2

Fig. 2 shows a fresh water producing apparatus A2. The fresh water producing apparatus A2 is a fresh water producing apparatus having two or more booster pumps. Elements of the fresh water producing apparatus A2 in Fig. 2 that are identical to the elements of the fresh water producing apparatus A1 in Fig. 1 are shown with the same symbols.

In the fresh water producing apparatus A2 in Fig. 2, the downstream end of a raw water line RL1, designed to transport a raw water 1 from outside the fresh water producing apparatus A2 to a raw water tank 2, is connected to the raw water tank 2. The raw water tank 2 and a pre-treatment unit 4 are connected by a raw water line RL2. A pump 3 designed to deliver the raw water 1 to the pre-treatment unit 4 is provided in the raw water line RL2. As the pump 3 operates, the raw water 1 is supplied from the raw water tank 2 to the pre-treatment unit 4, in which the raw water 1 is pre-treated. A raw water line RL3 is attached to the pre-treatment unit 4, and a branch point BP1, designed to divide water flow carried by the line, is provided at its downstream end.

The branch point BP1 and a first semipermeable membrane unit 7 are connected by a first raw water feed line FL1, and a valve 6a is provided in the first feed water line FL1. A booster pump 5a is placed on the first raw water feed line FL1 midway between the valve 6a and the first semipermeable membrane unit 7. The branch point BP1 and a second semipermeable membrane unit 8 are connected by a second raw water feed line FL2, and a valve 6b is provided in the second raw water feed line FL2. A booster pump 5b is placed on the second raw water feed line FL2 midway between the valve 6b and the second semipermeable membrane unit 8.

After exiting the pre-treatment unit 4, the raw water 1 flows through the raw water line RL3 and reaches the branch point BP1. Flow of the raw water 1 is divided at the branch point BP1, and one of the outgoing flows travels through the first raw water feed line FL1 past the valve 6a and the booster pump 5a and enters the feed water-side space of the first semipermeable membrane unit 7. The other outgoing flow travels through the second raw water feed line FL2 past the valve 6b and the booster pump 5b and enters the feed water-side space of the second semipermeable membrane unit 8. The booster pump 5a provides the raw water 1 flowing through the first raw water feed line FL1 with the pressure required by the first semipermeable membrane unit 7. The booster pump 5b provides the raw water 1 flowing through the second raw water feed line FL2 with the pressure required by the second semipermeable membrane unit 8. The valves 6a and 6b are used to control the flow rates of the raw waters supplied to the first semipermeable membrane unit 7 and the second semipermeable membrane unit 8, respectively.

In Fig. 2, the downstream end of the first raw water feed line FL1 is connected to the feed water receiving port of the first semipermeable membrane unit 7, while the downstream end of the second raw water feed line FL2 is connected to the feed water receiving port of the second semipermeable membrane unit 8. The concentrated water discharge port of the first semipermeable membrane unit 7 and a merger point MP1, provided on the second feed water line FL2, are connected by a concentrated water line CL1. The booster pump 5b is placed on the upstream side of the point where the second raw water feed line FL2 and the concentrated water line CL1 meet, namely the merger point MP1. The concentrated water discharge port of the second semipermeable membrane unit 8 is connected with a concentrated water line CL2, and An energy recovery unit 9 is provided in the concentrated water line CL2. A concentrated water 11 discharged from the second semipermeable membrane unit 8 is discharged outside the fresh water producing apparatus A2 via the energy recovery unit 9. The energy recovery unit 9 recovers the energy retained by the concentrated water flowing through the concentrated water line CL2.

The permeated water discharge port of the first semipermeable membrane unit 7 is connected with a permeated water line PL1, the downstream end of which is connected to a permeated water tank 10. The permeated water discharge port of the second semipermeable membrane unit 8 is connected with a permeated water line PL2, the downstream end of which is connected to the permeated water line PL1 at a merger point MP2. This line configuration allows the permeated water of the first semipermeable membrane unit 7 and the permeated water of the second semipermeable membrane unit 8 to be stored in the permeated water tank 10. The permeated water stored in the permeated water tank 10 is used as fresh water.

The differences between the fresh water producing apparatus A1 in Fig. 1 and the fresh water producing apparatus A2 in Fig. 2 are as follows. The booster pump 5 provided on the raw water line RL3 in the fresh water producing apparatus A1 is not existed in the fresh water producing apparatus A2. Instead of that, the booster pump 5a provided on the first raw water feed line FL1 and the booster pump 5b provided on the second raw water feed line FL2 are provided therein, and the booster pump 12 provided on the concentrated water discharge line CL1 in the fresh water producing apparatus A1 is not existed in the concentrated water discharge line CL1 in the fresh water producing apparatus A2.

### Example 3

Fig. 3 shows a fresh water producing apparatus A3. The fresh water producing apparatus A3 is a fresh water producing apparatus having two or more raw water lines. Elements of the fresh water producing apparatus A3 in Fig. 3 that are identical to the elements of the fresh water producing apparatus A1 in Fig. 1 are shown with the same symbols.

In the fresh water producing apparatus A3 in Fig. 3, the downstream end of a first raw water line RL1a, designed to transport a first raw water 1 a from outside the fresh water producing apparatus A3 to a raw water tank 2, and the downstream end of a second raw water line RL1b, designed to transport a second raw water 1b, which has a different composition from the first raw water 1 a, from outside the fresh water producing apparatus A3 to the raw water tank 2, are connected to the raw water tank 2. The raw water lines RL1 a and RL1 b are provided with valves 6c and 6d, respectively. The valve 6d is used to control the flow rate of the raw water 1 a delivered to the raw water tank 2, while the valve 6c is used to control the flow rate of the raw water 1 b delivered to the raw water tank 2.

The raw water tank 2 and a pre-treatment unit 4 are connected by a raw water line RL2. A pump 3 designed to deliver a raw water 1 to the pre-treatment unit 4 is provided in the raw water line RL2. As the pump 3 operates, the raw water 1 is supplied from the raw water tank 2 to the pre-treatment unit 4, in which the raw water 1 is pre-treated. A raw water line RL3 is attached to the pre-treatment unit 4, and a branch point BP1, designed to divide the water flow carried by the line, is provided at its downstream end. The raw water line RL3 is provided with a booster pump 5, designed to provide the raw water with the pressure required by the semipermeable membrane unit.

The branch point BP1 and a first semipermeable membrane unit 7 are connected by a first raw water feed line FL1, and a valve 6a is provided in the first raw water feed line FL1. The branch point BP1 and a second semipermeable membrane unit 8 are connected by a second raw water feed line FL2, and the second raw water feed line FL2 is provided with a valve 6b.

After exiting the pre-treatment unit 4, the raw water 1 flows through the raw water line RL3 and is pressurized by the booster pump 5 before reaching the branch point BP1. At the branch point BP1, the flow of the raw water 1 is divided, and one of the outgoing flows travels through the first raw water feed line FL1 past the valve 6a and enters the feed water-side space of the first semipermeable membrane unit 7. The other outgoing flow travels through the second raw water feed line FL2 past the valve 6b and enters the feed water-side space of the second semipermeable membrane unit 8. The valves 6a and 6b are used to control the flow rates of the raw waters supplied to the first semipermeable membrane unit 7 and the second semipermeable membrane unit 8, respectively.

In Fig. 3, the downstream end of the first raw water feed line FL1 is connected to the feed water receiving port of the first semipermeable membrane unit 7, while the downstream end of the second raw water feed line FL2 is connected to the feed water receiving port of the second semipermeable membrane unit 8. The concentrated water discharge port of the first semipermeable membrane unit 7 and a merger point MP1, provided on the second raw water feed line FL2, are connected by a concentrated water line CL1. The second raw water feed line FL2 is provided with a booster pump 12a midway between the point where the second raw water feed line FL2 and the concentrated water line CL1 meet, namely the merger point MP1, and the second semipermeable membrane unit 8. The booster pump 12a provides the raw water flowing through the second raw water feed line FL2 with the pressure required by the second semipermeable membrane unit 8.

The concentrated water discharge port of the second semipermeable membrane unit 8 is connected with a concentrated water line CL2, and An energy recovery unit 9 is provided in the concentrated water line CL2. A concentrated water 11 discharged from the second semipermeable membrane unit 8 is discharged outside the fresh water producing apparatus A3 via an energy recovery unit 9. The energy recovery unit 9 recovers the energy retained by the concentrated water flowing through the concentrated water line CL2.

The permeated water discharge port of the first semipermeable membrane unit 7 is connected with a permeated water line PL1, the downstream end of which is connected to a permeated water tank 10. The permeated water discharge port of the second semipermeable membrane unit 8 is connected with a permeated water line PL2, the downstream end of which is connected to the permeated water line PL1 at a merger point MP2. This line configuration allows the permeated water of the first semipermeable membrane unit 7 and the permeated water of the second semipermeable membrane unit 8 to be stored in the permeated water tank 10. The permeated water stored in the permeated water tank 10 is used as fresh water.

The differences between the fresh water producing apparatus A1 in Fig. 1 and the fresh water producing apparatus A3 in Fig. 3 are as follows. In the fresh water producing apparatus A1, the raw water is delivered to the raw water tank 2 via the single raw water line RL1, but, in the fresh water producing apparatus A3, the raw water is delivered to the raw water tank 2 via two raw water lines RL1 a and RL1b connected to different water sources respectively, and the booster pump 12 provided on the concentrated water discharge line CL1 in the fresh water producing apparatus A1 is not existed in the concentrated water discharge line CL1 in the fresh water producing apparatus A3. Instead of that, the booster pump 12a is provided on the second raw water feed line FL2.

### Example 4

Fig. 4 shows a fresh water producing apparatus A4. The fresh water producing apparatus A4 is a fresh water producing apparatus having a non-powered pressurization unit. Elements of the fresh water producing apparatus A4 in Fig. 4 that are identical to the elements of the fresh water producing apparatus A3 in Fig. 3 are shown with the same symbols.

In the fresh water producing apparatus A4 in Fig. 4, the downstream end of a first raw water line RL1a, designed to transport a first raw water 1 a from outside the fresh water producing apparatus A4 to a raw water tank 2, and the downstream end of a second raw water line RL1b, designed to transport a second raw water 1b, which has a different composition from the first raw water 1 a, from outside the fresh water producing apparatus A4 to the raw water tank 2, are connected to the raw water tank 2. A valve 6d is provided in the raw water line RL1a and a valve 6c is provided in the raw water line RL1b. The valve 6d is used to control the flow rate of the raw water 1 a delivered to the raw water tank 2, while the valve 6c is used to control the flow rate of the raw water 1 b delivered to the raw water tank 2.

The raw water tank 2 and a pre-treatment unit 4 are connected by a raw water line RL2. A pump 3 designed to deliver a raw water 1 to the pre-treatment unit 4 is provided in the raw water line RL2. As the pump 3 operates, the raw water 1 is supplied from the raw water tank 2 to the pre-treatment unit 4, in which the raw water 1 is pre-treated. A raw water line RL3 is attached to the pre-treatment unit 4, and a branch point BP1, designed to divide the water flow carried by the line, is provided at its downstream end. A booster pump 5, designed to provide the raw water with the pressure required by the semipermeable membrane unit 7, is provided in the raw water line RL3.

The branch point BP1 and the first semipermeable membrane unit 7 are connected by a first raw water feed line FL1, and a valve 6a is provided in the first raw water feed line FL1. The branch point BP1 and the second semipermeable membrane unit 8 are connected by a second raw water feed line FL2, and a valve 6b is provided in the second raw water feed line FL2.

After exiting the pre-treatment unit 4, the raw water 1 flows through the raw water line RL3 and is pressurized by the booster pump 5 before reaching the branch point BP1. At the branch point BP1, the flow of raw water 1 is divided, and one of the outgoing flows travels through the first raw water feed line FL1 past the valve 6a and enters the feed water-side space of the first semipermeable membrane unit 7. The other outgoing flow travels through the second raw water feed line FL2 past the valve 6b and enters the feed water-side space of the second semipermeable membrane unit 8. The valves 6a and 6b are used to control the flow rates of the raw waters supplied to the first semipermeable membrane unit 7 and the second semipermeable membrane unit 8, respectively.

In Fig. 4, the downstream end of the first raw water feed line FL1 is connected to the feed water receiving port of the first semipermeable membrane unit 7, while the downstream end of the second raw water feed line FL2 is connected to the feed water receiving port of the second semipermeable membrane unit 8. The concentrated water discharge port of the first semipermeable membrane unit 7 and a merger point MP1, provided on the second raw water feed line FL2, are connected by a concentrated water line CL1. A non-powered pressurization unit 13 is provided in the second raw water feed line FL2 midway between the point where the second raw water feed line FL2 and the concentrated water line CL1 meet, namely the merger point MP1, and the second semipermeable membrane unit 8. The non-powered pressurization unit 13 provides the raw water flowing through the second raw water feed line FL2 with the pressure required by the second semipermeable membrane unit 8.

The concentrated water discharge port of the second semipermeable membrane unit 8 is connected with a concentrated water line CL2, and the concentrated water line CL2 passes through the non-powered pressurization unit 13 before exiting the fresh water producing apparatus A4. In the non-powered pressurization unit 13, the pressure of the raw water flowing through the second raw water feed line FL2 to be supplied to the second semipermeable membrane unit 8 is controlled using the energy retained by the concentrated water of the second semipermeable membrane unit 8 flowing through the concentrated water line CL2. After passing through the non-powered pressurization unit 13, a concentrated water 11 is discharged outside the fresh water producing apparatus A4.

The permeated water discharge port of the first semipermeable membrane unit 7 is connected with a permeated water line PL1, the downstream end of which is connected to a permeated water tank 10. The permeated water discharge port of the second semipermeable membrane unit 8 is connected with a permeated water line PL2, the downstream end of which is connected to the permeated water line PL1 at a merger point MP2. This line configuration allows the permeated water of the first semipermeable membrane unit 7 and the permeated water of the second semipermeable membrane unit 8 to be stored in the permeated water tank 10. The permeated water stored in the permeated water tank 10 is used as fresh water.

The difference between the fresh water producing apparatus A3 in Fig. 3 and the fresh water producing apparatus A4 in Fig. 4 is that, while the fresh water producing apparatus A3 incorporates the booster pump 12a, placed on the raw water feed line FL2, and the energy recovery unit 9, placed on the concentrated water discharge line CL2, these are missing from the fresh water producing apparatus A4, replaced with the non-powered pressurization unit 13.

### Example 5

Fig. 5 shows a fresh water producing apparatus A5. The fresh water producing apparatus A5 is a fresh water producing apparatus having a semipermeable membrane subunit (auxiliary semipermeable membrane unit). Elements of the fresh water producing apparatus A5 in Fig. 5 that are identical to the elements of the fresh water producing apparatus A3 in Fig. 3 are shown with the same symbols.

In the fresh water producing apparatus A5 in Fig. 5, the downstream end of a first raw water line RL1 a, designed to transport a first raw water 1 a from outside the fresh water producing apparatus A5 to a raw water tank 2, and the downstream end of a second raw water line RL1b, designed to transport a second raw water 1b, which has a different composition from the first raw water 1 a, from outside the fresh water producing apparatus A5 to the raw water tank 2, are connected to the raw water tank 2. A valve 6d is provided in the raw water line RL1a and a valve 6d is provided in the raw water line. The valve 6d is used to control the flow rate of the raw water 1 a delivered to the raw water tank 2, while the valve 6c is used to control the flow rate of the raw water 1 b delivered to the raw water tank 2.

The raw water tank 2 and a pre-treatment unit 4 are connected by a raw water line RL2. A pump 3 is provided in the raw water line RL2 to deliver the raw water 1 to the pre-treatment unit 4. As the pump 3 operates, the raw water 1 is supplied from the raw water tank 2 to the pre-treatment unit 4, in which the raw water 1 is pre-treated. A raw water line RL3 is attached to the pre-treatment unit 4, and a branch point BP1 is provided at its downstream end. A booster pump 5 is provided in the raw water line RL3 to provide the raw water with the pressure required by semipermeable membrane units.

The branch point BP1 and a first semipermeable membrane unit 7 are connected by a first raw water feed line FL1, and a valve 6a is provided in the first raw water feed line FL1. The branch point BP1 and a second semipermeable membrane unit 8 are connected by a second feed water line FL2, and a valve 6b is provided in the second raw water feed line FL2.

A third raw water feed line FL3 branching from the branch point BP1 is provided, which is different from the first raw water feed line FL1 and the second raw water feed line FL2. The downstream end of the third raw water feed line FL3 is connected to a third semipermeable membrane unit (common auxiliary semipermeable membrane unit) 16. A valve 6m is provided in the third raw water feed line FL3.

After exiting the pre-treatment unit 4, the raw water 1 flows through the raw water line RL3 and is pressurized by the booster pump 5 before reaching the branch point BP1. At the branch point BP1, the flow of raw water 1 is divided into three, and one of the outgoing flows travels through the first raw water feed line FL1 past the valve 6a and enters the feed water-side space of the first semipermeable membrane unit 7. The second outgoing flow travels through the second raw water feed line FL2 past the valve 6b and enters the feed water-side space of the second semipermeable membrane unit 8. The third outgoing flow travels through the third raw water feed line FL3 past the valve 6m and enters the feed water-side space of the third semipermeable membrane unit (common auxiliary semipermeable membrane unit) 16. The valves 6a, 6b and 6m are used to control the flow rates of the raw waters supplied to the first semipermeable membrane unit 7, the second semipermeable membrane unit 8, and the third semipermeable membrane unit (common auxiliary semipermeable membrane unit) 16, respectively.

In Fig. 5, the downstream end of the first raw water feed line FL1 is connected to the feed water receiving port of the first semipermeable membrane unit 7; the downstream end of the second raw water feed line FL2 is connected to the feed water receiving port of the second semipermeable membrane unit 8; and the downstream end of the third raw water feed line FL3 is connected to the feed water receiving port of the third semipermeable membrane unit 16. The concentrated water discharge port of the first semipermeable membrane unit 7 and a merger point MP1 provided on the second raw water feed line FL2, are connected by a concentrated water line CL1. The second raw water feed line FL2 is provided with a booster pump 12a midway between the merger point MP1 on the second raw water feed line FL2 and the second semipermeable membrane unit 8. The booster pump 12a provides the raw water flowing through the second raw water feed line FL2 with the pressure required by the second semipermeable membrane unit 8.

The concentrated water discharge port of the second semipermeable membrane unit 8 is connected with a concentrated water line CL2, and an energy recovery unit 9 is provided in the concentrated water line CL2. A concentrated water 11 discharged from the second semipermeable membrane unit 8 is discharged outside the fresh water producing apparatus A5 via the energy recovery unit 9. The energy recovery unit 9 recovers the energy retained by the concentrated water flowing through the concentrated water line CL2.

The permeated water discharge port of the first semipermeable membrane unit 7 is connected with apermeated water line PL1, the downstream end of which is connected to a permeated water tank 10. The permeated water discharge port of the second semipermeable membrane unit 8 is connected with a permeated water line PL2, the downstream end of which is connected to the permeated water line PL1 at a merger point MP2, provided on the permeated water line PL1. This line configuration allows the permeated water of the first semipermeable membrane unit 7 and the permeated water of the second semipermeable membrane unit 8 to be stored in the permeated water tank 10. The permeated water stored in the permeated water tank 10 is used as fresh water.

The fresh water producing apparatus A5 in Fig. 5 also incorporates an auxiliary feed water line AFL1 that connects the second raw water feed line FL2 and the third raw water feed line FL3. More specifically, the auxiliary feed water line AFL1 connects a branch point BP2, provided on the second raw water feed line FL2 midway between the booster pump 12a in the second raw water feed line FL2 and the second semipermeable membrane unit 8, and a merger point MP3, provided on the third raw water feed line FL3 midway between the valve 6m in the third raw water feed line FL3 and the third semipermeable membrane unit (common auxiliary semipermeable membrane unit) 16. A valve 6p is provided in the auxiliary feed water line AFL1. The valve 6p is used to control the flow rate of the raw water flowing through the auxiliary feed water line AFL1.

The concentrated water discharge port of the third semipermeable membrane unit (common auxiliary semipermeable membrane unit) 16 is connected with a concentrated water line CL3. The downstream end of the concentrated water line CL3 is connected to the concentrated water line CL2 at a merger point MP4, provided on the concentrated water line CL2 midway between the second semipermeable membrane unit 8 and the energy recovery unit 9. A valve 6q is provided in the concentrated water line CL3. The valve 6q is used to control the flow rate of the concentrated water flowing through the concentrated water line CL3 towards the merger point MP4 after being discharged from the semipermeable membrane unit (common auxiliary semipermeable membrane unit) 16.

The concentrated water line CL3 is paired with an auxiliary concentrated water line ACL1. The auxiliary concentrated water line ACL1 connects a branch point BP3, provided on the concentrated water line CL3 midway between the third semipermeable membrane unit 16 and the valve 6q, and a merger point MP5, provided on the concentrated water line CL1 midway between the first semipermeable membrane unit 7 and the merger point MP1. A valve 6n is provided in the auxiliary concentrated water line ACL1. The valve 6n is used to control the flow rate of the concentrated water flowing through the auxiliary concentrated water line ACL1.

The permeated water discharge port of the third semipermeable membrane unit (common auxiliary semipermeable membrane unit) 16 is connected with a permeated water line PL3, the downstream end of which is connected to the permeated water line PL1 at a merger point MP6 provided on the permeated water line PL1. This line configuration allows the permeated water of the third semipermeable membrane unit (common auxiliary semipermeable membrane unit) 16 to be stored in the permeated water tank 10. The permeated water stored in the permeated water tank 10 is used as fresh water.

The difference between the fresh water producing apparatus A3 in Fig. 3 and the fresh water producing apparatus A5 in Fig. 5 is that the fresh water producing apparatus A5 contains the entire fresh water producing apparatus A3 in Fig. 3 plus the third semipermeable membrane unit (common auxiliary semipermeable membrane unit) 16, provided in parallel with the first semipermeable membrane unit 7 and the second semipermeable membrane unit 8 to complement them.

### Example 6

Fig. 6 shows a fresh water producing apparatus A6. The fresh water producing apparatus A6 is a fresh water producing apparatus having a single-stage semipermeable membrane unit provided in parallel with two stages of semipermeable membrane units. Elements of the fresh water producing apparatus A6 in Fig. 6 that are identical to the elements of the fresh water producing apparatus A3 in Fig. 3 are shown with the same symbols.

In the fresh water producing apparatus A6 in Fig. 6, the downstream end of a raw water line RL1 a, designed to transport a first raw water 1 a from outside the fresh water producing apparatus A3 to a raw water tank 2, and the downstream end of a raw water line RL1 b, designed to transport a second raw water 1 b, which has a different composition from the first raw water 1 a, from outside the fresh water producing apparatus A6 to the raw water tank 2, are connected to the raw water tank 2. A valve 6d is provided in the raw water lines RL1 a and a valve 6c is provided in the raw water line RL1 b. The valve 6d is used to control the flow rate of the raw water 1 a delivered to the raw water tank 2, while the valve 6c is used to control the flow rate of the raw water 1 b delivered to the raw water tank 2.

The raw water tank 2 and a pre-treatment unit 4 are connected by a raw water line RL2. A pump 3 is provided in the raw water line RL2 to deliver the raw water 1 to the pre-treatment unit 4. As the pump 3 operates, the raw water 1 is supplied from the raw water tank 2 to the pre-treatment unit 4, in which the raw water 1 is pre-treated. A raw water line RL3 is attached to the pre-treatment unit 4, and a branch point BP1, designed to divide the water flow carried by the line, is provided at its downstream end. A booster pump 5 is provided in the raw water line RL3 to provide the raw water with the pressure required by a semipermeable membrane unit.

The branch point BP1 and a first semipermeable membrane unit 7 are connected by a first raw water feed line FL1, and a valve 6a is provided in the first raw water feed line FL1. The branch point BP1 and a second semipermeable membrane unit 8 are connected by a second raw water feed line FL2, and a valve 6b is provided in the second raw water feed line FL2.

The second raw water feed line FL2 has a branch point BP4 midway between the branch point BP1 and the valve 6b. A fourth raw water feed line FL4 branched from the branch point BP4 is provided, which is different from the first raw water feed line FL1 and the second raw water feed line FL2. The downstream end of the fourth raw water feed line FL4 is connected to a fourth semipermeable membrane unit (first auxiliary semipermeable membrane unit) 8b. A valve 6f is provided in the fourth feed water line FL4.

On the fourth raw water feed line FL4 midway between the valve 6f and the fourth semipermeable membrane unit (first auxiliary semipermeable membrane unit) 8b, a booster pump 12b isprovided. The valve 6f is used to control the flow rate of the raw water flowing through the fourth raw water feed line FL4. The booster pump 12b provides the raw water flowing through the fourth raw water feed line FL4 with the pressure required by the fourth semipermeable membrane unit (first auxiliary semipermeable membrane unit) 8b.

After exiting the pre-treatment unit 4, the raw water 1 flows through the raw water line RL3 and is pressurized by the booster pump 5 before reaching the branch point BP1. At the branch point BP1, the flow of the raw water 1 is divided into two, and one of the outgoing flows travels through the first raw water feed line FL1 past the valve 6a and enters the feed water-side space of the first semipermeable membrane unit 7. The other outgoing flow is divided into two at the branch point BP4 as it travels through the second raw water feed line FL2. One of the outgoing flows generated at the branch point BP4 travels past the valve 6b and enters the feed water-side space of the second semipermeable membrane unit 8. The other outgoing flow travels through the fourth raw water feed line FL4 past the valve 6f and enters the feed water-side space of the fourth semipermeable membrane unit (first auxiliary semipermeable membrane unit) 8b. The valves 6a, 6b and 6f are used to control the flow rates of the raw waters supplied to the first semipermeable membrane unit 7, the second semipermeable membrane unit 8, and the fourth semipermeable membrane unit (first auxiliary semipermeable membrane unit) 8b, respectively.

In Fig. 6, the downstream end of the first raw water feed line FL1 is connected to the feed water receiving port of the first semipermeable membrane unit 7, while the downstream end of the second raw water feed line FL2 is connected to the feed water receiving port of the second semipermeable membrane unit 8. In addition, the downstream end of the fourth raw water feed line FL4 is connected to the feed water receiving port of the fourth semipermeable membrane unit (first auxiliary semipermeable membrane unit) 8b.

The concentrated water discharge port of the first semipermeable membrane unit 7 and the merger point MP1, provided on the second raw water feed line FL2, are connected by a concentrated water line CL1. A booster pump 12a is provided in the second raw water feed line FL2 midway between the merger point MP1 on in he second raw water feed line FL2 and the second semipermeable membrane unit 8. The booster pump 12a provides the raw water flowing through the second raw water feed line FL2 with the pressure required by the second semipermeable membrane unit 8.

The concentrated water discharge port of the second semipermeable membrane unit 8 is connected with a concentrated water line CL2, and an energy recovery unit 9 is provided in the concentrated water line CL2. After passing through the energy recovery unit 9, a concentrated water 11 is discharged outside the fresh water producing apparatus A6. The energy recovery unit 9 recovers the energy retained by the concentrated water flowing through the concentrated water line CL2.

The permeated water discharge port of the first semipermeable membrane unit 7 is connected with a permeated water line PL1, the downstream end of which is connected to a permeated water tank 10. The permeated water discharge port of the second semipermeable membrane unit 8 is connected with a permeated water line PL2, the downstream end of which is connected to the permeated water line PL1 at a merger point MP2. This line configuration allows the permeated water of the first semipermeable membrane unit 7 and the permeated water of the second semipermeable membrane unit 8 to be stored in the permeated water tank 10. The permeated water stored in the permeated water tank 10 is used as fresh water.

The fresh water producing apparatus A6 in Fig. 6 further incorporates a concentrated water line CL4 that connects a merger point MP7, provided on the concentrated water line CL2 midway between the second semipermeable membrane unit 8 and the energy recovery unit 9, and the concentrated water discharge port of the fourth semipermeable membrane unit (first auxiliary semipermeable membrane unit) 8b. The concentrated water from the fourth semipermeable membrane unit (first auxiliary semipermeable membrane unit) 8b flows through the concentrated water line CL4, and this flow merges with the flow of the concentrated water from the second semipermeable membrane unit 8 at the merger point MP7.

The permeated water discharge port of the fourth semipermeable membrane unit (first auxiliary semipermeable membrane unit) 8b is connected with a permeated water line PL4. The downstream end of the permeated water line PL4 is connected to a merger point MP8, provided on the permeated water line PL2 midway between the second semipermeable membrane unit 8 and the merger point MP2, provided on the permeated water line PL1. The permeated water of the fourth semipermeable membrane unit (first auxiliary semipermeable membrane unit) 8b flows through the permeated water line PL4, and merges with the flow of the permeated water of the second semipermeable membrane unit 8 at the merger point MP8, and is stored in the permeated water tank 10 for use as fresh water.

The difference between the fresh water producing apparatus A3 in Fig. 3 and the fresh water producing apparatus A6 in Fig. 6 is that the fresh water producing apparatus A6 adds the fourth semipermeable membrane unit (first auxiliary semipermeable membrane unit) 8a to the fresh water producing apparatus A3 as a complementary semipermeable membrane unit connected in parallel with the second semipermeable membrane unit 8.

### Example 7

Fig. 7 shows a fresh water producing apparatus A7. The fresh water producing apparatus A7 is a fresh water producing apparatus having a single-stage semipermeable membrane unit connected in parallel with two stages of semipermeable membrane units. Elements of the fresh water producing apparatus A7 in Fig. 7 that are identical to the elements of the fresh water producing apparatus A3 in Fig. 3 are shown with the same symbols. Since the fresh water producing apparatus A7 in Fig. 7 has essentially the same configuration as the fresh water producing apparatus A3 in Fig. 3, the description of the fresh water producing apparatus A7 is limited to those elements that are additions or modifications to the fresh water producing apparatus A3.

In Fig. 7, a branch point BP5 is provided on the first raw water line RL1a on the upstream side of the valve 6d. The upstream end of a raw water line RL1 s is connected to the branch point BP5, and its downstream end is connected to a raw water tank 2s. A valve 6e is provided in the raw water line RL1 s. The valve 6e is used to control the flow rate of a raw water flowing through the raw water line RL1s towards the raw water tank 2s. The raw water tank 2s stores a raw water 1s.

The raw water tank 2s and a pre-treatment unit 4s are connected by a raw water line RL2s. A pump 3s is provided in the raw water line RL2s, and the pump 3s delivers the raw water 1s to a pre-treatment unit 4s. A raw water line RL3s is attached to the pre-treatment unit 4s, and its downstream end is connected to a booster pump 5s. The booster pump 5s and the feed water receiving port of a fifth semipermeable membrane unit (second auxiliary semipermeable membrane unit) 8c are connected by a fifth raw water feed line (auxiliary raw water feed line) FL5. The booster pump 5s provides the raw water 1 s with the pressure required by the fifth semipermeable membrane unit (second auxiliary semipermeable membrane unit) 8c and delivers it to the feed water-side space of the semipermeable membrane unit (second auxiliary semipermeable membrane unit) 8c.

The concentrated water discharge port of the fifth semipermeable membrane unit (second auxiliary semipermeable membrane unit) 8c is connected with a concentrated water line CL5, and an energy recovery unit 9b is provided in the concentrated water line CL5. A concentrated water 11 b discharged from the fifth semipermeable membrane unit (second auxiliary semipermeable membrane unit) 8c is discharged outside the fresh water producing apparatus A7 via the energy recovery unit 9b. The energy recovery unit 9b recovers the energy retained by the concentrated water flowing through the concentrated water line CL5.

The permeated water discharge port of the fifth semipermeable membrane unit (second auxiliary semipermeable membrane unit) 8c is connected with a permeated water line PL5, the downstream end of which is connected to the permeated water line PL2 of the second semipermeable membrane unit 8 at a merger point MP9. The permeated water of the fifth semipermeable membrane unit (second auxiliary semipermeable membrane unit) 8c flows through the permeated water lines PL5, PL2 and PL1 in that order before entering the permeated water tank 10 for storage. The permeated water stored in the permeated water tank 10 is used as fresh water.

The difference between the fresh water producing apparatus A3 in Fig. 3 and the fresh water producing apparatus A7 in Fig. 7 is that the fresh water producing apparatus A7 adds the fifth semipermeable membrane unit (second auxiliary semipermeable membrane unit) 8c to the fresh water producing apparatus A3 as a complementary semipermeable membrane unit. The fifth semipermeable membrane unit (second auxiliary semipermeable membrane unit) 8c, provided in parallel with the second semipermeable membrane unit 8, treats the portion of the first raw water 1a that has branched off the first raw water line RL1 a, which is exactly the same as the raw water 1 s stored in the raw water tank 2s.

### Example 8

Fig. 8 shows a fresh water producing apparatus A8. The fresh water producing apparatus A8 is a fresh water producing apparatus that allows a first-stage semipermeable membrane unit to be used for the treatment of a permeate of a second-stage semipermeable membrane unit. Elements of the fresh water producing apparatus A8 in Fig. 8 that are identical to the elements of the fresh water producing apparatus A2 in Fig. 2 are shown with the same symbols.

In the fresh water producing apparatus A8 in Fig. 8, the downstream end of a raw water line RL1, designed to transport a raw water 1 from outside the fresh water producing apparatus A8 to a raw water tank 2, is connected to the raw water tank 2. The raw water tank 2 and a pre-treatment unit 4 are connected by a raw water line RL2. A pump 3 is provided in the raw water line RL2 to deliver the raw water 1 to the pre-treatment unit 4. As the pump 3 operates, the raw water 1 is supplied from the raw water tank 2 to the pre-treatment unit 4, in which the raw water 1 is pre-treated. A raw water line RL3 is attached to the pre-treatment unit 4, and a branch point BP1, designed to divide the water flow carried by the line, is provided at its downstream end.

The branch point BP1 and a first semipermeable membrane unit 7 are connected by a first raw water feed line FL1, and a valve 6a is provided in the first raw water feed line FL1. A booster pump 5 is provided on the first raw water feed line FL1 midway between the valve 6a and the first semipermeable membrane unit 7. The branch point BP1 and a second semipermeable membrane unit 8 are connected by a second raw water feed line FL2, and a valve 6b is provided in the second raw water feed line FL2. A booster pump 12a is provided on the second raw water feed line FL2 midway between the valve 6b and the second semipermeable membrane unit 8.

After exiting the pre-treatment unit 4, the raw water 1 flows through the raw water line RL3 and reaches the branch point BP1. The flow of the raw water 1 is divided at the branch point BP1, and one of the outgoing flows travels through the first raw water feed line FL1 past the valve 6a and the booster pump 5 and enters the feed water-side space of the first semipermeable membrane unit 7. The other outgoing flow travels through the second raw water feed line FL2 past the valve 6b and the booster pump 12a and enters the feed water-side space of the second semipermeable membrane unit 8. The booster pump 5 provides the raw water 1 flowing through the first raw water feed line FL1 with the pressure required by the first semipermeable membrane unit 7. The booster pump 12a provides the raw water 1 flowing through the second raw water feed line FL2 with the pressure required by the second semipermeable membrane unit 8. The valves 6a and 6b are used to control the flow rates of the raw waters supplied to the first semipermeable membrane unit 7 and the second semipermeable membrane unit 8, respectively.

In Fig. 8, the downstream end of the first raw water feed line FL1 is connected to the feed water receiving port of the first semipermeable membrane unit 7, while the downstream end of the second raw water feed line FL2 is connected to the feed water receiving port of the second semipermeable membrane unit 8. The concentrated water discharge port of the first semipermeable membrane unit 7 and a merger point MP1, provided on the second raw water feed line FL2, are connected by a concentrated water line CL1. The booster pump 12a is provided midway between the point where the second raw water feed line FL2 and the concentrated water line CL1 meet, namely the merger point MP1, and the second semipermeable membrane unit 8. The concentrated water discharge port of the second semipermeable membrane unit 8 is connected with a concentrated water line CL2, and an energy recovery unit 9 is provided in the concentrated water line CL2. A concentrated water 11 discharged from the second semipermeable membrane unit 8 is discharged outside the fresh water producing apparatus A2 via the energy recovery unit 9. The energy recovery unit 9 recovers the energy retained by the concentrated water flowing through the concentrated water line CL2.

The permeated water discharge port of the first semipermeable membrane unit 7 is connected with a permeated water line PL1, the downstream end of which is connected to a permeated water tank 10. The permeated water discharge port of the second semipermeable membrane unit 8 is connected with a permeated water line PL2, the downstream end of which is connected to the permeated water line PL1 at a merger point MP2. This line configuration allows the permeated water of the first semipermeable membrane unit 7 and the permeated water of the second semipermeable membrane unit 8 to be stored in the permeated water tank 10. The permeated water stored in the permeated water tank 10 is used as fresh water.

The fresh water producing apparatus A8 in Fig. 8 further incorporates an intermediate tank 17 designed to store the permeated water of the second semipermeable membrane unit 8. The intermediate tank 17 and a branch point BP6, provided on the permeated water line PL2, are connected by a raw water line RL4. A valve 6ba is provided in the raw water line RL4, while a valve 6ca is provided in the permeated water line PL2 midway between the branch point BP6 and the merger point MP2. The valves 6ca and 6ba are used to control the dividing ratio at the branch point BP6 of the permeated water of the second semipermeable membrane unit 8 flowing through the permeated water line PL2, namely the flow rate ratio at which the permeated water of the second semipermeable membrane unit 8 is divided into a portion flowing towards the permeated water tank 10 and a portion flowing towards the intermediate tank 17.

The intermediate tank 17 and the raw water feed line FL1 are connected by a raw water feed line FL5. The downstream end of the raw water feed line FL5 is connected to the raw water feed line FL1 at a merger point MP10. The merger point MP10 provided on the raw water feed line FL1 midway between the valve 6a and the booster pump 5. A valve 6ct is provided in the raw water feed line FL5 midway between the intermediate tank 17 and the merger point MP10. The permeated water of the second semipermeable membrane unit 8 stored in the intermediate tank 17 is delivered to the raw water feed line FL1 via the valve 6ct. The valve 6ct is used to control the flow rate of the permeated water supplied from the intermediate tank 17 to the raw water feed line FL1.

The fresh water producing apparatus A8 in Fig. 8 is distinct in that it has a configuration that allows all or part of the permeated water of the second semipermeable membrane unit 8 to be used as feed water for the first semipermeable membrane unit 7.

### Example 9

Fig. 9 shows a fresh water producing apparatus A9. The fresh water producing apparatus A9 is a fresh water producing apparatus that allows a first-stage semipermeable membrane unit to be used for the treatment of the permeated water of a second-stage semipermeable membrane unit. Since the fresh water producing apparatus A9 in Fig. 9 has essentially the same configuration as the fresh water producing apparatus A8 in Fig. 8, the description of the fresh water producing apparatus A9 is limited to those elements that are additions or modifications to the fresh water producing apparatus A8.

In the fresh water producing apparatus A9 in Fig. 9, a branch point BP7 is provided on the raw water feed line FL1 midway between the booster pump 5 and the first semipermeable membrane unit 7. The branch point BP7 is connected with a raw water feed line FL1a, the downstream end of which is connected to a sixth semipermeable membrane unit (third auxiliary semipermeable membrane unit) 7a. A valve 6h is provided in the raw water feed line FL1a, and the valve 6h is used to control the flow rate of the raw water flowing through the raw water feed line FL1a towards the sixth semipermeable membrane unit (third auxiliary semipermeable membrane unit) 7a.

The concentrated water discharge port of the sixth semipermeable membrane unit (third auxiliary semipermeable membrane unit) 7a is connected with a concentrated water line CL6, the downstream end of which is connected to a merger point MP11, provided on the concentrated water line CL1. This allows the concentrated water from the sixth semipermeable membrane unit (third auxiliary semipermeable membrane unit) 7a to flow towards the merger point MP1, provided on the second raw water feed line FL2, after merging with the concentrated water from the first semipermeable membrane unit 7 at the merger point MP11. At the merger point MP1, the raw water flowing through the second raw water feed line FL2 merges with the concentrated water from the first semipermeable membrane unit 7 and the concentrated water from the sixth semipermeable membrane unit (third auxiliary semipermeable membrane unit) 7a.

The permeated water discharge port of the sixth semipermeable membrane unit (third auxiliary semipermeable membrane unit) 7a is connected with a permeated water line PL6, the downstream end of which is connected to a merger point MP2, provided on the permeated water line PL1. This allows the permeated water of the sixth semipermeable membrane unit (third auxiliary semipermeable membrane unit) 7a to merge with the permeated water of the first semipermeable membrane unit 7 at the merger point MP2 before being stored in the permeated water tank 10 for use as fresh water.

A branch point BP8 is provided on the raw water feed line FL2 midway between the booster pump 12a and the second semipermeable membrane unit 8. The branch point BP8 is connected with a raw water feed line FL2a, and a semipermeable membrane unit (fourth auxiliary semipermeable membrane unit) 8d is provided at its downstream end. A valve 6i is provided in the raw water feed line FL2a. The valve 6i is used to control the flow rate of the raw water delivered to a seventh semipermeable membrane unit (fourth auxiliary semipermeable membrane unit) 8d.

The concentrated water discharge port of the seventh semipermeable membrane unit (fourth auxiliary semipermeable membrane unit) 8d is connected with a concentrated water line CL7, the downstream end of which is connected to a merger point MP12 provided on a concentrated water line CL2 for the second semipermeable membrane unit 8. This allows the concentrated water from the seventh semipermeable membrane unit (fourth auxiliary semipermeable membrane unit) 8d to merge with the concentrated water from the second semipermeable membrane unit 8 at the merger point MP12, flow through the concentrated water line CL2, and be discharged outside the fresh water producing apparatus A9.

The permeated water discharge port of the seventh semipermeable membrane unit (fourth auxiliary semipermeable membrane unit) 8d is connected with a permeated water line PL7, the downstream end of which is connected to a merger point MP13 provided on a permeated water line PL2 midway between the second semipermeable membrane unit 8 and a branch point BP6. The permeated water of the seventh semipermeable membrane unit (fourth auxiliary semipermeable membrane unit) 8d merges with the permeated water of the second semipermeable membrane unit 8 at the merger point MP13 and flows through the permeated water line PL2.

The fresh water producing apparatus A9 in distinct in that it adds two auxiliary semipermeable membrane units, i.e., the sixth semipermeable membrane unit (third auxiliary semipermeable membrane unit) 7a and the seventh semipermeable membrane unit (fourth auxiliary semipermeable membrane unit) 8d to the fresh water producing apparatus A8 as complementary units connected in parallel with the first semipermeable membrane unit 7 and the second semipermeable membrane unit 8, respectively.

### Comparative Example 1

Fig. 10 is a configuration diagram of a publicly known fresh water producing apparatus PA1 (flow chart). The fresh water producing apparatus PA1 is a fresh water producing apparatus capable of alternating the mode of operation of a second-stage semipermeable membrane unit between the treatment of the concentrated water from a first-stage semipermeable membrane unit and the treatment of its permeated water according to the type of raw water. Fig. 10 shows the functional arrangement of two or more semipermeable membrane units employed by the fresh water producing apparatus PA1 to separate solutes contained in water, as well as water pipes directly or indirectly connected thereto (lines), water storage tanks, water feed pumps, and water flow rate control valves, and other elements.

The fresh water producing apparatus PA1 comprises, from upstream down, a raw water tank P2, a pre-treatment unit P4, designed to provide raw water with filtration and other pre-treatments prior to delivery to a semipermeable membrane unit, a first semipermeable membrane unit P7, a second semipermeable membrane unit P8, a permeated water tank P10, and an energy recovery unit P9.

The raw water tank P2 is connected with the downstream end of a raw water line PRL1a, designed to transport a raw water P1a from outside the fresh water producing apparatus PA1 to the raw water tank P2, and with the downstream end of a raw water line PRL1b, designed to transport a raw water P1b from outside the fresh water producing apparatus PA1 to the raw water tank P2. The raw water tank P2 and the pre-treatment unit P4 are connected by a raw water line PRL2. A pump P3 is provided in the raw water line PRL2 to deliver the raw water P1 to the pre-treatment unit P4. As the pump P3 is operated, the raw water P1 is supplied from the raw water tank P2 to the pre-treatment unit P4, in which the raw water P1 is provided with filtration and other pre-treatments.

A raw water line PRL3 is attached to the pre-treatment unit P4, and a booster pump P5 is provided at its downstream end. A raw water feed line PFL1 is attached to the booster pump P5, and its downstream end is connected to the feed water receiving port of the first semipermeable membrane unit P7. The booster pump P5 provides the raw water with the pressure required by the semipermeable membrane unit.

The concentrated water discharge port of the first semipermeable membrane unit P7 is connected with a concentrated water line PCL1. An energy recovery unit P9 is provided in the concentrated water line PCL1, and a concentrated water P11a from the first semipermeable membrane unit P7 is discharged outside the fresh water producing apparatus PA1 via the energy recovery unit P9. The energy recovery unit P9 recovers the energy retained by the concentrated water. A valve P6a is provided in the concentrated water line PCL1 midway between the first semipermeable membrane unit P7 and the energy recovery unit P9.

The concentrated water line PCL1 has a branch point PBP1 midway between the first semipermeable membrane unit P7 and the valve P6a. A raw water feed line PFL2 is attached to the branch point PBP1, and its downstream end is connected to the feed water receiving port of the second semipermeable membrane unit P8. A valve P6b is provided in the raw water feed line PFL2. The valves P6a and P6b are used to control the flow rate of the concentrated water flowing through the concentrated water line PCL1 and the flow rate of the concentrated water flowing through the raw water feed line PFL2, respectively. The concentrated water flowing through the raw water feed line PFL2 is raw water to be treated in the second semipermeable membrane unit P8.

A permeated water line PPL1 is attached to the permeated water discharge port of the first semipermeable membrane unit P7, and its downstream end is connected to the permeated water tank P10. A valve P6c is provided in the permeated water line PPL1. The permeated water line PPL1 has a branch point PBP2 midway between the first semipermeable membrane unit P7 and a valve P6c. A permeated water line PPL1a is attached to the branch point PBP2, and its downstream end is connected to a permeated water tank P17. A valve P6d is provided in the permeated water line PPL1a. The valves P6c and P6d are used to control the flow rate of the permeated water flowing through the permeated water line PPL1 and the flow rate of the permeated water flowing through the permeated water line PPL1a.

The permeated water tank P17 and the second semipermeable membrane unit P8 are connected by a raw water feed line PPL1 b. A booster pump P12 is provided in the raw water feed line PPL1b. The booster pump P12 provides the permeated water (raw water for the second semipermeable membrane unit P8) flowing through the raw water feed line PPL1 b with the pressure required by the second semipermeable membrane unit P8.

A concentrated water line PCL2 is attached to the concentrated water discharge port of the second semipermeable membrane unit P8, and a concentrated water P11b from the second semipermeable membrane unit P8 is discharged outside the fresh water producing apparatus PA1 after flowing though the concentrated water line PCL2. A permeated water line PPL2 is attached to the permeated water discharge port of the second semipermeable membrane unit P8, and its downstream end is connected to a merger point PMP1, provided on the permeated water line PPL1 midway between the valve P6c and the permeated water tank P10. A valve P6e is provided in the permeated water line PPL2. The valves P6ca and P6e are used to control the flow rate of the permeated water of the first semipermeable membrane unit P7 flowing towards the permeated water tank P10 and the flow rate of the permeated water of the second semipermeable membrane unit P8 flowing towards the permeated water tank P10.

### Comparative Example 2

Fig. 11 is a configuration diagram of a publicly known fresh water producing apparatus PA2 (flow chart). The fresh water producing apparatus PA2 is a fresh water producing apparatus capable of alternating the mode of operation of a second-stage semipermeable membrane unit between parallel treatment with a first-stage semipermeable membrane unit and the treatment of its permeated water according to the type of raw water. Fig. 11 shows the functional arrangement of two or more semipermeable membrane units employed by the fresh water producing apparatus PA2 to separate solutes contained in water, as well as water pipes directly or indirectly connected thereto (lines), water storage tanks, water feed pumps, and water flow rate control valves, and other elements.

The fresh water producing apparatus PA2 comprises, from upstream down, a raw water tank P2, a pre-treatment unit P4, designed to provide raw water with filtration and other pre-treatments prior to delivery to a first semipermeable membrane unit, a first semipermeable membrane unit P7, a second semipermeable membrane unit P8, and a permeated water tank P10.

The raw water tank P2 is connected with the downstream end of a raw water line PRL1, designed to transport a raw water P1 from outside the fresh water producing apparatus PA1 to the raw water tank P2. The raw water tank P2 and the pre-treatment unit P4 are connected by a raw water line PRL2. A pump P3 is provided in the raw water line PRL2 to deliver the raw water P1 to the pre-treatment unit 4. As the pump P3 operates, the raw water P1 is supplied from the raw water tank P2 to the pre-treatment unit P4, in which the raw water P1 is provided with filtration and other pre-treatments.

A raw water line PRL3 is attached to the pre-treatment unit P4, and a booster pump P5 is provided at its downstream end. A raw water feed line PFL1 is attached to the booster pump P5, and its downstream end is connected to the feed water receiving port of a first semipermeable membrane unit P7. The booster pump P5 provides the raw water with the pressure required by the semipermeable membrane unit.

A concentrated water line PCL1 is attached to the concentrated water discharge port of the first semipermeable membrane unit P7. The downstream end of the concentrated water line PCL1 is located outside the fresh water producing apparatus PA2, and the concentrated water from the first semipermeable membrane unit P7 is discharged outside the fresh water producing apparatus PA2 by flowing through the concentrated water line PCL1 as a concentrated water P11.

A permeated water line PPL1 is attached to the permeated water discharge port of the first semipermeable membrane unit P7, and its downstream end is connected to a permeated water tank P10. A valve P6j is provided in the permeated water line PPL1. The permeated water line PPL1 has a branch point PBP4 midway between the first semipermeable membrane unit P7 and the valve P6j. A permeated water line PPL1a is attached to the branch point PBP4, and its downstream end is connected to an intermediate permeated water tank P17. A valve P6k is provided in the permeated water line PPL1a. The valves P6j and P6k are used to control the flow rate of the permeated water flowing towards the permeated water tank P10 and the flow rate of the permeated water flowing towards the intermediate permeated water tank P17.

A permeated water line PPL1 b is attached to the intermediate permeated water tank P17, and its downstream end is connected to the feed water receiving port of a second semipermeable membrane unit P8. A booster pump P12 is provided in the permeated water line PPL1b. The booster pump P12 provides the permeated water supplied to the second semipermeable membrane unit P8 as feed water with the required pressure. A vale P6I is provided in the permeated water line PPL1 b midway between the booster pump P12 and the second semipermeable membrane unit P8.

The raw water feed line PFL1 has a branch point PBP3 midway between the booster pump P5 and the first semipermeable membrane unit P7. A raw water feed line PFL1a is attached to the branch point PBP3, and its downstream end is connected to a merger point PMP2, provided on the permeated water line PPL1 b midway between the valve P6I and the second semipermeable membrane unit P8. The valves P6b and P6I are used to control the flow rate of the raw water delivered to the second semipermeable membrane unit P8 via the raw water feed line PFL1a and the flow rate of the permeated water (feed water) supplied from the intermediate permeated water tank P17 to the second semipermeable membrane unit P8.

A concentrated water line PCL2 is attached to the concentrated water discharge port of the second semipermeable membrane unit P8, and its downstream end is connected to a merger point PMP3, provided on the concentrated water line PCL1. The concentrated water from the second semipermeable membrane unit P8 is discharged outside the fresh water producing apparatus PA2 after merging with the concentrated water from the first semipermeable membrane unit P7 at the merger point PMP3.

A permeated water line PPL2 is attached to the permeated water discharge port of the second semipermeable membrane unit P8, and its downstream end is connected to a merger point PMP3, provided on the permeated water line PPL1 midway between the valve P6j and the permeated water tank P10. The permeated water of the second semipermeable membrane unit P8 merges with permeated water of the first semipermeable membrane unit P7 at the merger point PMP3 and is stored in the permeated water tank P10 for use as fresh water.

### Example 10

Fig. 12 shows a fresh water producing apparatus A12. The fresh water producing apparatus A12 is another embodiment of a fresh water producing apparatus that incorporates two stages of semipermeable membrane units and a single-stage semipermeable membrane unit connected in parallel with them and mixes the concentrated waters from the two stages of semipermeable membrane units into the feed water for the parallel semipermeable membrane unit. Since the fresh water producing apparatus A12 in Fig. 12 has essentially the same configuration as the fresh water producing apparatus A7 in Fig. 7, the description of the fresh water producing apparatus A12 is limited to those elements that are additions or modifications to the fresh water producing apparatus A7.

The fresh water producing apparatus A12 in Fig. 12 modifies the raw water line RL3s in the fresh water producing apparatus A7 in Fig. 7. To be specific, the fresh water producing apparatus A12 has introduced a raw water tank 17a as shown in Fig. 12 midway between a pre-treatment unit 4s and a pump 5s, both associated with the raw water line RL3s, in the fresh water producing apparatus A7 as shown in Fig. 7, so that the the pre-treatment unit 4s and the raw water tank 17a are connected by a raw water line RL3sa, while the raw water tank 17a and the pump 5s are connected by a raw water line RL3sb.

The fresh water producing apparatus A12 in Fig. 12 modifies the manner in which the concentrated water from the second semipermeable membrane unit 8 is used in the fresh water producing apparatus A7 in Fig. 7. To be specific, whereas the concentrated water from the second semipermeable membrane unit 8 in the fresh water producing apparatus A7 is discharged outside the fresh water producing apparatus A7 after flowing through the concentrated water line CL2 as shown in Fig. 7, the downstream end of the concentrated water line CL2, through which the concentrated water from the second semipermeable membrane unit 8 in the fresh water producing apparatus A12 flows, is connected to the raw water tank 17a and thereby allows the concentrated water from the second semipermeable membrane unit 8 to be retained in the raw water tank 17a as shown in Fig. 12.

As a result of these modifications, the raw water tank 17a in the fresh water producing apparatus A12 in Fig. 12 ends up retaining the raw water 1s, flowing in from the raw water line RL3sa, and the concentrated water from the second semipermeable membrane unit 8, flowing in from the concentrated water line CL2. The water 1sa retained in the raw water tank 17a is used as feed water for a fifth semipermeable membrane unit (second auxiliary semipermeable membrane unit) 8c. To be more specific, the water 1sa retained in the raw water tank 17a is delivered to the feed water-side space of the fifth semipermeable membrane unit (second auxiliary semipermeable membrane unit) 8c via a feed water line FL5 at the required pressure by the booster pump 5s.

Whereas the fresh water producing apparatus A7 in Fig. 7 has a configuration that allows raw water 1s to be supplied to the fifth semipermeable membrane unit (second auxiliary semipermeable membrane unit) 8c, the fresh water producing apparatus A12 in Fig. 12 has a configuration that allows both the raw water 1s and the concentrated water from the second semipermeable membrane unit 8 to be supplied to the fifth semipermeable membrane unit (second auxiliary semipermeable membrane unit) 8c.

### Example 11

Fig. 13 shows a fresh water producing apparatus A13. The fresh water producing apparatus A13 is another embodiment of a fresh water producing apparatus that incorporates two stages of semipermeable membrane units and a single-stage semipermeable membrane unit connected in parallel with them and mixes the concentrated water from the parallel semipermeable membrane unit into the feed water for the first of the two stages of semipermeable membrane units. Since the fresh water producing apparatus A13 in Fig. 13 has essentially the same configuration as the fresh water producing apparatus A7 in Fig. 7, the description of the fresh water producing apparatus A13 is limited to those elements that are additions or modifications to the fresh water producing apparatus A7.

The fresh water producing apparatus A13 in Fig. 13 modifies the manner in which the concentrated water from the fifth semipermeable membrane unit (second auxiliary semipermeable membrane unit) 8c is used in the fresh water producing apparatus A7 in Fig. 7. To be specific, whereas the concentrated water from the fifth semipermeable membrane unit (second auxiliary semipermeable membrane unit) 8c in the fresh water producing apparatus A7 is discharged outside the fresh water producing apparatus A7 after flowing through the concentrated water line CL5 as shown in Fig. 7, the concentrated water from the fifth semipermeable membrane unit (second auxiliary semipermeable membrane unit) 8c is supplied to the first semipermeable membrane unit 7 in the fresh water producing apparatus A13 as show in Fig. 13.

Namely, in the fresh water producing apparatus A13 in Fig. 13, the concentrated water line CL5 in the fresh water producing apparatus A7 in Fig. 7 leads to a raw fwater feed line FL6. The downstream end of the raw water feed line FL6 is connected to a merger point MP14, provided on the raw water line RL3 midway between the pre-treatment unit 4 and the booster pump 5. This allows the concentrated water from the fifth semipermeable membrane unit (second auxiliary semipermeable membrane unit) 8c to merge with the raw water 1 flowing through the raw water line RL3 at the merger point MP14. A valve 6r is provided in the raw water feed line FL6. The valve 6r is used to control the flow rate of the concentrated water from the fifth semipermeable membrane unit (second auxiliary semipermeable membrane unit) 8c, which flows through the feed water line FL6.

### Example 12

Fig. 14 shows a fresh water producing apparatus A14. The fresh water producing apparatus A14 is another embodiment of a fresh water producing apparatus that incorporates a single-stage semipermeable membrane unit connected in parallel with two stages of semipermeable membrane units and mixes the concentrated water from the parallel semipermeable membrane unit into the feed water for the second of the two stages of semipermeable membrane units. Since the fresh water producing apparatus A14 in Fig. 14 has essentially the same configuration as the fresh water producing apparatus A7 in Fig. 7, the description of the fresh water producing apparatus A14 is limited to those elements that are additions or modifications to the fresh water producing apparatus A7.

The fresh water producing apparatus A14 in Fig. 14 modifies the manner in which the concentrated water from the fifth semipermeable membrane unit (second auxiliary semipermeable membrane unit) 8c is used in the fresh water producing apparatus A7 in Fig. 7. To be specific, whereas the concentrated water from the fifth semipermeable membrane unit (second auxiliary semipermeable membrane unit) 8c in the fresh water producing apparatus A7 is discharged outside the fresh water producing apparatus A7 after flowing through the concentrated water line CL5 as shown in Fig. 7, the concentrated water from the fifth semipermeable membrane unit (second auxiliary semipermeable membrane unit) 8c is supplied to the second semipermeable membrane unit 8 in the fresh water producing apparatus A14 as show in Fig. 14.

Namely, the concentrated water line CL5 in the fresh water producing apparatus A7 in Fig. 7 leads to a raw water feed line FL7 in the fresh water producing apparatus A14 in Fig. 14. The downstream end of the raw water feed line FL7 is connected to a merger point MP15, provided on the raw water feed line FL2 midway between the merger point MP1 and the booster pump 12a. This allows the concentrated water from the fifth semipermeable membrane unit (second auxiliary semipermeable membrane unit) 8c to merge with the raw water 1 flowing through the raw water feed line FL2 at the merger point MP15. A valve 6s is provided in the raw water feed line FL7. The valve 6s is used to control the flow rate of the concentrated water from the fifth semipermeable membrane unit (second auxiliary semipermeable membrane unit) 8c, which flows through the raw water feed line FL7.

### Industrial applicability

The invention relates to a fresh water producing apparatus that employ semipermeable membrane units designed to produce fresh water by treating raw water, such as seawater, river water, groundwater or treated wastewater. More specifically, it relates to a fresh water producing apparatus capable of efficiently producing fresh water according to the type of raw water, as well as operation methods for them, and makes it possible to produce fresh water with the desired water quality at a low cost by changing the treatment loads of two or more semipermeable membrane units according to the water quality of raw water.

### Reference signs list

1, 1 a, 1b, 1 s, 1sa: Raw water
2, 2s: Raw water tank
3, 3s: Pump
4, 4s: Pre-treatment unit
5, 5a, 5b, 5s: Booster pump
6n (n = alphabet letter): Valve
7: First semipermeable membrane unit (first-stage semipermeable membrane unit)
7a: Sixth semipermeable membrane unit (third auxiliary semipermeable membrane unit)
8: Second semipermeable membrane unit (second-stage semipermeable membrane unit)
8b: Fourth semipermeable membrane unit (first auxiliary semipermeable membrane unit)
8c: Fifth semipermeable membrane unit (second auxiliary semipermeable membrane unit)
8d: Seventh semipermeable membrane unit (fourth auxiliary semipermeable membrane unit)
9, 9b: Energy recovery unit
10: Permeated water tank
11, 11b: Concentrated water
12, 12a, 12b: Booster pump
13: Non-powered pressurization unit
16: Third semipermeable membrane unit (common auxiliary semipermeable membrane unit)
17, 17a: Intermediate tank
ACLN (N = number): Auxiliary concentrated water line
AFLN (N = number): Auxiliary feed water line
AN (N = number): Fresh water producing apparatus proposed by invention
BPN (N = number): Branch point
CLN (N = number): Concentrated water line
FLN (N = number): Raw water feed line
FLNn (N = number, n = alphabet letter): Raw water feed line
MPN (N = number): Merger point
P1, P1a, P1b: Raw water
P2: Raw water tank
P3: Pump
P4: Pre-treatment unit
P5: Booster pump
P7: First-stage semipermeable membrane unit (first semipermeable membrane unit)
P8: Second-stage semipermeable membrane unit (second semipermeable membrane unit)
P6n (n = alphabet letter): Valve
P7: First semipermeable membrane unit (first-stage semipermeable membrane unit)
P8: Second semipermeable membrane unit (second-stage semipermeable membrane unit)
P9: Energy recovery unit
P10: Permeated water tank
P11, P11a, P11b: Concentrated water
P12: Booster pump
P17, P17a: Intermediate tank
PA1, PA2: Publicly known fresh water producing apparatus
PBPN (N = number): Branch point
PCLN (N = number): Concentrated water line
PFLN (N = number): Raw water feed line
PFLNn (N = number, n = alphabet letter): Raw water feed line
PLN (N = number): Permeated water line
PMPN (N = number): Merger point
PPLN (N = number): Permeated water line
PPL1a: Permeated water line
PPL1b: Raw water feed line (permeated water line)
PRLN (N = number): Raw water line
PRLNn (N = number, n = alphabet letter): Raw water line
RLN (N = number): Raw water line
RLNn (N = number, n = alphabet letter): Raw water line

## Claims

1. A fresh water producing apparatus to produce fresh water from solute-containing raw water which comprises a first semipermeable membrane unit and a second semipermeable membrane unit, wherein a first raw water feed line for feeding raw water is connected to the first semipermeable membrane unit, while a second raw water feed line for feeding a raw water is connected to the second semipermeable membrane unit, and wherein the first semipermeable membrane unit and the second semipermeable membrane unit are connected together with a concentrated water line that feeds concentrated water from the first semipermeable membrane unit to the second semipermeable membrane unit.

2. The fresh water producing apparatus according to claim 1, wherein the raw water to be fed to the first raw water feed line and the second raw water feed line is a mixture of at least two types of raw water having different compositions.

3. The fresh water producing apparatus according to claim 1, wherein a booster pump or a non-powered pressurization unit is provided at a position in the second raw water feed line located midway between a merger point of the second raw water feed line connected to the second semipermeable membrane unit and the concentrated water line attached to the first semipermeable membrane unit and the second semipermeable membrane unit.

4. The fresh water producing apparatus according to claim 1, further comprising a common auxiliary semipermeable membrane unit capable of operating in parallel with both the first semipermeable membrane unit and the second semipermeable membrane unit.

5. The fresh water producing apparatus according to claim 1, further comprising an auxiliary semipermeable membrane unit capable of operating in parallel with the first semipermeable membrane unit and/or an auxiliary semipermeable membrane unit capable of operating in parallel with the second semipermeable membrane unit.

6. The fresh water producing apparatus according to claim 5, wherein the auxiliary semipermeable membrane unit capable of operating in parallel with the second semipermeable membrane unit is fed with different raw water from the raw water fed to the first semipermeable membrane unit and the second semipermeable membrane unit.

7. The fresh water producing apparatus according to claim 1, wherein at least part of the permeated water of the second semipermeable membrane unit is mixed into the raw water for the first semipermeable membrane unit.

8. The fresh water producing apparatus according to claim 1, wherein the water permeability of the first semipermeable membrane unit is higher than the water permeability of the second semipermeable membrane unit.

9. The fresh water producing apparatus according to claim 1, wherein the pressure resistance of the first semipermeable membrane unit is lower than the pressure resistance of the second semipermeable membrane unit.

10. The fresh water producing apparatus according to claim 1, wherein the corrosion resistance of the first semipermeable membrane unit is lower than the corrosion resistance of the second semipermeable membrane unit.

11. An operation method for the fresh water producing apparatus described in any of claims 1 to 11, wherein the flow rate of the raw water in the first raw water feed line connected to the first semipermeable membrane unit and the flow rate of the raw water in the second raw water feed line connected to the second semipermeable membrane unit are controlled so as to keep the feed pressure of raw water to the first semipermeable membrane unit and/or the concentrations of solutes contained in the permeated water of the first semipermeable membrane unit within set values.

12. An operation method for the fresh water producing apparatus described in claim 4, wherein using or not using of the common auxiliary semipermeable membrane unit and the flow rate of its feed water are controlled according to the flow rate of the feed water in the first raw water feed line connected to the first semipermeable membrane unit and the flow rate of the feed water in the second raw water feed line connected to the second semipermeable membrane unit.

13. An operation method for the fresh water producing apparatus described in claim 5, wherein using or not using of the auxiliary semipermeable membrane units capable of parallel operation and the flow rate of their feed water are controlled so as to keep the feed pressure of the feed water for the first semipermeable membrane unit and the feed pressure of the feed water for the second semipermeable membrane unit within set values.

14. The operation method for a fresh water producing apparatus according to any of claims 11 to 13, wherein a line to mix at least part of the permeated water of the second semipermeable membrane unit into the feed water for the first semipermeable membrane unit is provided and at least part of the permeated water of the second semipermeable membrane unit is mixed into the feed water for the first semipermeable membrane unit so as to keep the water quality of the treated water within set values.

15. The fresh water producing apparatus according to any one of claims 5 to 7, wherein at least either the concentrated water from the first semipermeable membrane unit and the second semipermeable membrane unit or the concentrated water from the parallel auxiliary semipermeable membrane unit is mixed into the feed water for any of the other semipermeable membrane units.
